# EUROPÄISCHE PATENTSCHRIFT

(11) **EP 3 109 410 B1**
(45) Veröffentlichungstag und Bekanntmachung des Hinweises auf die Patenterteilung: **12.09.2018**
(21) Anmeldenummer: 16175765.3
(22) Anmeldetag: 22.06.2016
(51) Int. Cl.: F01D 17/16, F02C 6/08, F04D 29/56, F01D 9/04, F04D 29/68

(54) **STATORVORRICHTUNG FÜR EINE STRÖMUNGSMASCHINE MIT EINER GEHÄUSEEINRICHTUNG UND MEHREREN LEITSCHAUFELN**
STATOR DEVICE FOR A TURBO ENGINE WITH A HOUSING DEVICE AND MULTIPLE GUIDE VANES
DISPOSITIF DE STATOR POUR UNE TURBOMACHINE COMPRENANT UN DISPOSITIF DE CARTER ET PLUSIEURS AUBES DIRECTRICES

(30) Priorität: 25.06.2015 DE 102015110249
(43) Veröffentlichungstag der Anmeldung: 28.12.2016
(73) Patentinhaber: Rolls-Royce Deutschland Ltd & Co KG, 15827 Blankenfelde-Mahlow (DE)
(72) Erfinder: Grothe, Patrick, 10318 Berlin (DE)
(74) Vertreter: Kronthaler, Wolfgang N.K.

(56) Entgegenhaltungen:
- EP-A1- 2 881 548
- US-A1- 2011 058 931

## Beschreibung

Die Erfindung betrifft eine Statorvorrichtung für eine Strömungsmaschine mit einer Gehäuseeinrichtung und mehreren Leitschaufeln gemäß der im Patentanspruch 1 näher definierten Art und eine Schaufelradvorrichtung gemäß der im Patentanspruch 14 näher definierten Art.

Aus der Praxis sind Statorvorrichtungen von Verdichtern für Flugtriebwerke bekannt, welche mit um eine Mittelachse verstellbar ausgebildeten Leitschaufeln ausgeführt sind. Die umfangsseitig verteilt in einer Gehäuseeinrichtung angeordneten Leitschaufeln weisen jeweils ein Schaufelblatt und eine sich in radialer Richtung der Statorvorrichtung anschließende, auch als Penny bezeichnete Plattform auf, wobei die Plattformen gemeinsam mit der Gehäuseeinrichtung einen Kernstromkanal des Flugtriebwerks in radialer Richtung der Statorvorrichtung begrenzen. Wiederum in radialer Richtung des Flugtriebwerks auf einer dem Schaufelblatt abgewandten Seite der Plattformen schließt sich jeweils ein spindelförmiger Bereich an, über den die Leitschaufeln um die Mittelachse des spindelförmigen Bereichs gegenüber der Gehäuseeinrichtung verdrehbar gelagert sind. Die mit einem bezüglich der Mittelachse des spindelförmigen Bereichs kreisrunden Querschnitt ausgeführte Plattform weist einen bezüglich der Mittelachse des spindelförmigen Bereichs größeren Querschnitt als der spindelförmige Bereich auf. Die Plattformen sind jeweils in einer zu der Mittelachse des spindelförmigen Bereichs konzentrischen Ausnehmung der Gehäuseeinrichtung gelagert, wobei zwischen der Gehäuseeinrichtung und den Plattformen der Leitschaufeln ein umlaufender Spalt vorliegt. Zudem ist eine dem Kernstromkanal abgewandte Fläche der Plattformen gegenüber der Gehäuseeinrichtungen in radialer Richtung beabstandet.

Eine mit einer derartigen Statorvorrichtung ausgeführte Strömungsmaschine weist nachteilhafterweise einen nicht zufriedenstellenden Wirkungsgrad auf.

Aus der EP 2 881 548 A1 ist eine Gasturbine mit einer Verstellleitschaufel bekannt, die einen Drehzapfen, einen Drehteller und ein Leitschaufelblatt aufweist. Der Drehzapfen ist in einer Bohrung eines Gehäuses angeordnet, wobei zwischen der Bohrung und dem Drehteller ein Dichtring angeordnet ist.

Der vorliegenden Erfindung liegt die Aufgabe zugrunde, eine Statorvorrichtung und eine Schaufelradvorrichtung zur Verfügung zu stellen, wobei ein Wirkungsgrad einer mit solch einer Statorvorrichtung oder Schaufelradvorrichtung ausgeführten Strömungsmaschine verbessert ist.

Erfindungsgemäß wird diese Aufgabe mit einer Statorvorrichtung mit den Merkmalen des Patentanspruches 1 gelöst.

Es wird eine Statorvorrichtung eines Verdichters oder einer Turbine für eine Strömungsmaschine, insbesondere einer stationären Gasturbine oder eines Flugtriebwerks, mit einer Gehäuseeinrichtung und mehreren Leitschaufeln, die umfangsseitig verteilt an der Gehäuseeinrichtung angeordnet sind, vorgeschlagen. Dabei sind die Leitschaufeln jeweils mit einem Schaufelblatt und jeweils wenigstens einer Plattform ausgeführt sind. Die Plattformen bilden zumindest bereichsweise eine Oberfläche eines im Betrieb der Statorvorrichtung mit Arbeitsfluid durchströmten Ringkanals und begrenzen diesen vorzugsweise zumindest bereichsweise in radialer Richtung der Statorvorrichtung. Die Plattformen sind jeweils gegenüber der Gehäuseeinrichtung verstellbar, insbesondere um eine Mittelachse der Plattform drehbar gelagert. Es ist ein Strömungsbereich vorgesehen, über den im Betrieb der Statorvorrichtung ein Arbeitsfluid zumindest bereichsweise in radialer Richtung der Statorvorrichtung auf einer dem Ringkanal abgewandten Seite der Plattform von einer stromab gelegenen Druckseite des Schaufelblatts zu einer stromauf gelegenen Saugseite des Schaufelblatts strömt, wobei der Strömungsbereich durch einen zwischen der Plattform und der Gehäuseeinrichtung im Bereich einer Oberfläche des Ringkanals in radialer Richtung der Leitschaufeln eine Mittelachse eines spindelförmigen Bereichs der Plattform umlaufenden Spalt, der sich ausgehend von der Oberfläche des Ringkanals in axialer Richtung der Mittelachse nach außen erstreckt, und einen Abstand zwischen einer dem Ringkanal abgewandten Fläche der Plattform in radialer Richtung der Strömungsmaschine gegenüber der Gehäuseeinrichtung gebildet ist.

Erfindungsgemäß ist hierbei wenigstens eine an den Strömungsbereich grenzende, durch eine Ausnehmung gebildete Absaugeinrichtung vorgesehen, über die im Betrieb der Statorvorrichtung Arbeitsfluid aus dem Strömungsbereich ableitbar ist.

Die erfindungsgemäße Lösung beruht auf der Erkenntnis, dass durch den Strömungsbereich, der insbesondere zumindest bereichsweise durch eine Ausnehmung in radialer Richtung der Leitschaufel zwischen der Plattform und der Gehäuseeinrichtung und eine Ausnehmung in radialer Richtung der Statorvorrichtung zwischen einer dem Schaufelblatt abgewandten Fläche der Plattform und der Gehäuseeinrichtung gebildet ist, im Betrieb einer mit der erfindungsgemäßen Statorvorrichtung ausgeführten Strömungsmaschine ein Teil des durch den Ringkanal geführten Arbeitsfluids als Leckageströmung geführt wird. Die Leckageströmung wird im Betrieb aufgrund eines Druckunterschieds zwischen der Druckseite und der Saugseite des Schaufelblatts und eines ansteigenden Druckgradienten in Strömungsrichtung des Arbeitsfluids in dem Ringkanal durch den Strömungsbereich geführt. Aufgrund des relativ hohen Drucks im Bereich der stromab liegenden Druckseite des Schaufelblatts wird ein Teil einer durch den Ringkanal strömenden Hauptströmung in unerwünschter Weise von der stromab liegenden Druckseite des Schaufelblatts über eine dem Ringkanal abgewandte Seite der Plattform zu einer stromauf liegenden Saugseite des Schaufelblatts geführt, in dessen Bereich der Druck gegenüber dem Druck im Bereich der Druckseite niedriger ist. Bei einem Ausströmen der Leckageströmung im Bereich der Saugseite des Schaufelblatts aus dem Strömungsbereich interagiert die aus dem Strömungsbereich austretende Leckageströmung mit der Hauptströmung des Arbeitsfluids im Ringkanal, wobei in der Hauptströmung ein sogenannter Blockagebereich mit einer gegenüber umliegenden Bereichen der Hauptströmung reduzierten Strömungsgeschwindigkeit auftritt. Dieser Effekt führt dazu, dass die Leckageströmung einen erheblichen negativen Einfluss auf den Wirkungsgrad der Strömungsmaschine hat.

Durch das Vorsehen der Absaugeinrichtung wird ein Massenstrom der Leckageströmung, der im Bereich der Saugseite des Schaufelblatts aus dem Strömungsbereich in die Hauptströmung des Ringkanals eintritt, reduziert oder ein Einströmen von Leckageströmung in den Ringkanal im Bereich der Saugseite des Schaufelblatts vollständig unterbunden. Dies wird dadurch erreicht, dass die Absaugeinrichtung auf einer dem Strömungsbereich abgewandten Seite mit einem Raum verbunden ist, in dem ein statischer Druck vorliegt, der geringer als ein statischer Druck im Strömungsbereich ist. Im Betrieb der Statorvorrichtung wird somit zumindest ein Teil des im Bereich der Druckseite der Hauptströmung entnommenen Massenstroms nicht über den Strömungsbereich auf der Saugseite zurück in die Hauptströmung im Ringkanal geleitet, sondern aus dem Strömungsbereich abgezweigt. Durch die Abführung eines Teils der Leckageströmung aus dem Strömungsbereich wird die Hauptströmung im Bereich der Saugseite des Schaufelblatts gegenüber Ausführungen ohne eine Absaugeinrichtung deutlich weniger beeinträchtigt. Eine verlustbehaftete Interaktion der Leckageströmung mit der Hauptströmung ist hierdurch reduziert, woraus vorteilhafterweise ein verbesserter Wirkungsgrad und somit auch ein reduzierter spezifischer Treibstoffverbrauch einer mit der erfindungsgemäßen Statorvorrichtung ausgeführten Strömungsmaschine folgen.

Die Reduzierung der im Bereich der Statorvorrichtung in die Hauptströmung einströmenden Leckageströmung durch das Vorsehen der erfindungsgemäßen Absaugeinrichtung wirkt sich zudem vorteilhafterweise positiv auf im Ringkanal der Statorvorrichtung nachgeordnete Schaufeleinrichtungen aus.

Die Plattformen können grundsätzlich einen in radialer Richtung der Statorvorrichtung inneren und/oder auch einen in radialer Richtung der Statorvorrichtung äußeren Teil der Oberfläche des Ringkanals bilden, wobei eine Absaugeinrichtung im Bereich der in radialer Richtung der Statorvorrichtung inneren und/oder äußeren Plattformen vorgesehen sein kann.

Die Absaugeinrichtung ist vorzugsweise als Materialausnehmung in der Gehäuseeinrichtung ausgeführt und kann beispielsweise kanalförmig bzw. als Bohrung ausgebildet sein. Alternativ hierzu kann die Ausnehmung mit einem separaten Bauteil ausgeführt sein.

Bei einer vorteilhaften Ausführung einer erfindungsgemäßen Statorvorrichtung ist es vorgesehen, dass die Absaugeinrichtung direkt an die Oberfläche des Ringkanals grenzt. Alternativ hierzu kann es auch vorgesehen sein, dass die Absaugeinrichtung in radialer Richtung der Statorvorrichtung beabstandet zu der Oberfläche des Ringkanals an den Strömungsbereich grenzt. Die Absaugeinrichtung grenzt bei einer Plattform, die sich radial nach außen an das Schaufelblatt der Leitschaufel anschließt, vorzugsweise in radialer Richtung der Statorvorrichtung außerhalb des Ringkanals an den Strömungsbereich, wohingegen die Absaugeinrichtung bei einer Plattform, die sich radial nach innen an das Schaufelblatt der Leitschaufel anschließt, vorzugsweise in radialer Richtung der Statorvorrichtung innerhalb des Ringkanals an den Strömungsbereich grenzt.

Eine durch geringe Verluste im Bereich der Absaugeinrichtung gekennzeichnete Statorvorrichtung erstreckt sich im Wesentlichen in radialer Richtung der Statorvorrichtung. Grundsätzlich kann die beispielsweise als Bohrung ausgeführte Absaugeinrichtung auch gegenüber der radialen Richtung der Statorvorrichtung gewinkelt angeordnet sein oder einen gekrümmten Verlauf aufweisen, wobei eine Ausgestaltung der Absaugeinrichtung insbesondere derart gewählt ist, dass sich im Betrieb der Statorvorrichtung eine Strömung im Bereich der Absaugeinrichtung nicht ablöst.

Die Absaugeinrichtung kann in einem der Druckseite des Schaufelblatts und/oder in einem der Saugseite des Schaufelblatts der Leitschaufel zugewandten Bereich mit dem Strömungsbereich verbunden sein, wobei eine Absaugwirkung der Absaugeinrichtung durch deren Position nicht wesentlich beeinflusst wird.

Um eine gewünschte Absaugung der Leckageströmung aus dem Strömungsbereich durch die Absaugeinrichtung in sämtlichen Verstellpositionen der Leitschaufeln sicherzustellen, erstreckt sich die Absaugeinrichtung bei einer vorteilhaften Ausführung der Statorvorrichtung in Umfangsrichtung der Leitschaufel über einen Winkelbereich, der insbesondere größer 20°, vorzugsweise größer als 30° ist, wobei der jeweils gewählte Winkelbereich an den maximalen Verstellwinkel der Leitschaufel angepasst ist und beispielsweise auch 180° betragen kann. Hierdurch kann auf einfache Weise erreicht werden, dass in jeder Position der Leitschaufel eine Verbindung der in die Gehäuseeinrichtung integrierten Absaugeinrichtung mit dem Strömungsbereich vorliegt. Zudem kann hierdurch ein Massenstrom, der im Bereich der Saugseite des Schaufelblatts wieder in die Hauptströmung eintritt, reduziert werden.

Es kann auch vorgesehen sein, dass die Absaugeinrichtung derart ausgeführt ist, dass die Absaugeinrichtung nur bei bestimmten Verstellpositionen der Leitschaufeln mit dem Strömungsbereich verbunden ist und bei anderen Verstellpositionen nicht mit dem Strömungsbereich verbunden ist. Hierdurch kann beispielsweise auf einfache Weise erreicht werden, dass aus dem Strömungsbereich nur während eines Teillastbetriebs des Flugtriebwerks und nicht während eines Nominalbetriebs Leckageströmung über die Absaugeinrichtung abgesaugt wird.

Bei einer vorteilhaften Ausführung einer erfindungsgemäßen Statorvorrichtung verläuft die Absaugeinrichtung bezüglich einer Zentralachse der Statorvorrichtung umfangsseitig im Wesentlichen umlaufend in der Gehäuseeinrichtung. Eine derartige Ausführung der Absaugeinrichtung ist einfach zu fertigen. Leckageströmungen in den Strömungsbereichen sämtlicher Leitschaufeln der Statorvorrichtung können hierbei auf einfache Weise aus den jeweiligen Strömungsbereichen abgesaugt und beispielsweise einem gemeinsamen Raum zugeführt werden. Um eine ausreichend große Stabilität der Statorvorrichtung zu erzielen, können dabei bezüglich einer Zentralachse der Statorvorrichtung umfangsseitig verteilt angeordnet Stege vorgesehen sein, über die die Gehäuseeinrichtung im Bereich der umlaufenden Absaugeinrichtung verstärkt ist.

Die Gehäuseeinrichtung kann bei einer vorteilhaften Ausführung der erfindungsgemäßen Statorvorrichtung im Bereich der Leitschaufel eine an den Ringkanal grenzende Ausnehmung aufweisen, über die im Betrieb der Statorvorrichtung der Hauptströmung in herkömmlicher Weise gezielt ein Massenstrom entnehmbar ist. Gemeinsam mit dem über die Absaugeinrichtung aus der Leckageströmung entnommenen Massenstrom kann der im Bereich der Ausnehmung entnommene Massenstrom als Zapfluft in bekannter Weise verwendet werden.

Bei einer besonders vorteilhaften Weiterbildung der erfindungsgemäßen Statorvorrichtung ist es vorgesehen, dass wenigstens eine Plattform in axialer Richtung der Statorvorrichtung zwischen zwei Referenzpunkten des Ringkanals angeordnet ist, wobei ein erster Referenzpunkt einen Randpunkt des Ringkanals darstellt, der bezüglich einer Mittellängsachse der Plattform um 10 % einer axialen Erstreckung der Plattform stromauf eines vorderen Endes der Plattform angeordnet ist, und wobei ein zweiter Referenzpunkt einen Randpunkt des Ringkanals darstellt, der bezüglich der Mittellängsachse der Plattform um 10 % der axialen Erstreckung der Plattform stromab eines hinteren Endes der Plattform angeordnet ist, wobei zumindest ein Randbereich der Plattform in radialer Richtung der Statorvorrichtung gegenüber einer geradlinigen Verbindung der beiden Referenzpunkte in den Ringkanal ragt.

Dadurch, dass die Plattform zumindest mit einem Randbereich in der Art einer Stufe in den Ringkanal ragt, werden die Druckverhältnisse der Hauptströmung im Bereich des Randbereichs der Plattform der Leitschaufeln in vorteilhafterweise derart beeinflusst, dass ein im Betrieb der Statorvorrichtung durch den Strömungsbereich strömender Massenstrom gegenüber einer Ausführung der Leitschaufel mit nicht in den Ringkanal ragender Plattform reduziert ist. Hierdurch wird ein im Betrieb der Statorvorrichtung von der Druckseite des Schaufelblatts zu der Saugseite des Schaufelblatts durch den Strömungsbereich strömender Massenstrom reduziert, wodurch auch eine verlustbehaftete Interaktion der Leckageströmung mit der Hauptströmung reduziert ist. Somit ist ein Wirkungsgrad einer eine derartige Statorvorrichtung aufweisenden Strömungsmaschine weiter verbessert und auch ein spezifischer Treibstoffverbrauch wird reduziert. Durch den in den Ringkanal hineinragenden Randbereich der Plattform werden zudem auch die Druckverhältnisse im Bereich einer in Umfangsrichtung der Statorvorrichtung benachbarten Plattform in vorteilhafter Weise beeinflusst.

Eine im Betrieb der Statorvorrichtung durch den Strömungsbereich geführte Leckageströmung ist besonders gering, wenn sich der gegenüber der geradlinigen Verbindung der beiden Referenzpunkte in den Ringkanal ragende Randbereich der Plattform in einem in axialer Richtung der Statorvorrichtung vorderen Bereich der Plattform befindet. Dies resultiert aus der Tatsache, dass die Hauptströmung im Bereich des in den Ringkanal ragenden Randbereichs durch diesen umgelenkt und aufgestaut wird, wodurch ein statischer Druck im Bereich eines Austritts der Leckageströmung aus dem Strömungsbereich erhöht wird. Ein Druckunterschied zwischen der stromab gelegenen Druckseite und der stromauf gelegenen Saugseite des Schaufelblatts wird somit reduziert, woraus wiederum ein reduzierter durch den Strömungsbereich strömender Massenstrom folgt.

Der gleiche Effekt ist auch dadurch erzielbar, dass sich der gegenüber der geradlinigen Verbindung der beiden Referenzpunkte in den Ringkanal ragende Randbereich der Plattform in einem in axialer Richtung der Statorvorrichtung hinteren Bereich der Plattform befindet. Hierdurch wird im Betrieb der Statorvorrichtung ein statischer Druck im Bereich eines Eintritts der Leckageströmung in den Strömungsbereich reduziert, da durch den in den Ringkanal ragenden Randbereich der Plattform die Hauptströmung umgelenkt wird und hierdurch statischer Druck in dynamischen Druck umgewandelt wird. Auch durch diese Maßnahme wird eine Druckdifferenz zwischen einem Eintritt der Leckageströmung in den Strömungsbereich und einem Austritt der Leckageströmung aus dem Strömungsbereich reduziert.

Besonders vorteilhaft ist es, wenn sowohl der in axialer Richtung der Statorvorrichtung vordere Randbereich der Plattform als auch der in axialer Richtung der Statorvorrichtung hintere Randbereich der Plattform in den Ringkanal ragen, da hierdurch ein statischer Druck im Bereich des vorderen Randbereichs der Plattform erhöht und ein statischer Druck im Bereich des hinteren Randbereichs der Plattform reduziert wird. Durch das insgesamt reduzierte Druckgefälle zwischen dem vorderen Randbereich der Plattform und dem hinteren Randbereich der Plattform wird im Betrieb der Statorvorrichtung somit nur ein besonders geringer Massenstrom durch den Strömungsbereich geführt, wodurch ein Wirkungsgrad einer mit der Statorvorrichtung ausgeführten Strömungsmaschine vorteilhafterweise hoch ist.

Bei einer vorteilhaften Ausführung der erfindungsgemäßen Statorvorrichtung ist die Plattform der Leitschaufel in einem bezüglich der radialen Richtung der Statorvorrichtung inneren und/oder äußeren Randbereich des Schaufelblatts angeordnet. Unabhängig davon, in welchem in radialer Richtung weisenden Randbereich des Ringkanals die Plattform angeordnet ist, ist durch den in den Ringkanal ragenden Randbereich der Plattform ein durch den Strömungsbereich strömender Massenstrom reduzierbar.

Die Druckverhältnisse im Bereich des sich in den Ringkanal erstreckenden Randbereichs der Plattform sind in besonders vorteilhafter Weise verbessert, wenn sich der in den Ringkanal ragende Randbereich der Plattform gegenüber der geradlinigen Verbindung der Referenzpunkte um wenigstens 0,3 %, insbesondere zwischen 0,5 % und 2,5 % bis 4 %, vorzugsweise zwischen 0,7 % und 1,5 % einer Erstreckung des Ringkanals in radialer Richtung der Statorvorrichtung im Bereich des Randbereichs, d. h. einer senkrecht zur axialen Richtung der Statorvorrichtung angeordneten Breite des Ringkanals, in den Ringkanal erstreckt.

Um die Druckverhältnisse im Bereich des in den Ringkanal ragenden Randbereichs der Plattform in gewünschtem Umfang beeinflussen zu können, ist es bei einer vorteilhaften Ausführung der erfindungsgemäßen Statorvorrichtung vorgesehen, dass der sich in den Ringkanal erstreckende Randbereich der Plattform in einem in axialer Richtung der Statorvorrichtung vorderen bzw. hinteren Bereich mit einer Verrundung ausgeführt ist.

Wenn der sich in den Ringkanal erstreckende Randbereich der Plattform mit einem Überhang ausgeführt ist, wobei die Plattform in einem dem Ringkanal zugewandten Bereich eine größere Erstreckung in axialer Richtung der Statorvorrichtung als in einem der Oberfläche des Ringkanals abgewandten Bereich aufweist, wird die Leckageströmung bei einer Anordnung des Überhangs in einem in axialer Richtung der Statorvorrichtung hinteren Randbereich der Plattform nach einer Ausleitung aus dem Strömungsbereich im Bereich des Überhangs umgelenkt und um diesen herum beschleunigt, so dass die Hauptströmung durch die aus dem Strömungsbereich ausgeleitete Leckageströmung vorteilhafterweise in reduziertem Umfang beeinflusst wird. Durch eine Anordnung des Überhangs in einem in axialer Richtung der Statorvorrichtung vorderen Randbereich der Plattform ist vorteilhafterweise ein statischer Druck im Bereich des vorderen Randbereichs der Plattform im Betrieb der Statorvorrichtung weiter erhöht. Der Überhang kann dabei insbesondere nasenförmig ausgeführt sein.

Bei einer vorteilhaften Weiterbildung der Statorvorrichtung übergreift der Überhang in axialer Richtung der Statorvorrichtung die an die Plattform angrenzende Gehäuseeinrichtung zumindest bereichsweise. Wenn der Überhang in dem in axialer Richtung der Statorvorrichtung vorderen Randbereich angeordnet ist, wird im Betrieb der Statorvorrichtung ein Druck im Bereich der Saugseite der Leitschaufel durch eine große Stauwirkung durch den Überhang vorteilhafterweise stark erhöht, wodurch ein durch den Strömungsbereich geförderter Massenstrom vorteilhafterweise gering ist.

Der gegenüber der geradlinigen Verbindung der beiden Referenzpunkte in den Ringkanal ragende Randbereich der Plattform erstreckt sich bei einer vorteilhaften Ausführung der Erfindung bezüglich einer Umfangsrichtung der Leitschaufel über einen Winkelbereich beispielsweise größer 20°, insbesondere größer 30°. Ein Übergang von dem in den Ringkanal ragenden Randbereich zu nicht in den Ringkanal ragenden Bereichen der Plattform ist dabei vorzugsweise fließend, d. h. ohne Stufe, ausgeführt. Besonders vorteilhaft ist es, wenn der in den Ringkanal ragende Randbereich der Plattform die Plattform komplett umläuft.

Es wird weiterhin eine Schaufelradvorrichtung mit einer derartigen Statorvorrichtung und einer Rotorvorrichtung vorgeschlagen, wobei die Absaugeinrichtung mit einem Leitungsbereich verbunden ist, über den Arbeitsfluid im Betrieb der Statorvorrichtung der Rotorvorrichtung zuführbar ist.

Ein Wirkungsgrad einer mit einer solchen Schaufelradvorrichtung ausgeführten Strömungsmaschine ist vorteilhafterweise hoch, da neben einer Wirkungsgradverbesserung durch die Reduzierung des aus dem Strömungsbereich in die Hauptströmung eingeleiteten Massenstroms in oben näher beschriebenem Umfang der im Betrieb der Statorvorrichtung der Leckageströmung entnommene Massenstrom selbst zur Verbesserung des Wirkungsgrads der Strömungsmaschine eingesetzt wird. Dies resultiert daraus, dass durch die Einleitung des Massenstroms insbesondere im Bereich von Rotorspitzen von Laufschaufeln der Rotorvorrichtung in diesem Bereich auftretende Verwirbelungen reduziert werden. Der durch die Absaugeinrichtung der Leckageströmung entnommene Massenstrom der Statorvorrichtung wird vorzugsweise der Rotorvorrichtung zugeführt, die in axialer Richtung der Schaufelradvorrichtung der Statorvorrichtung direkt vorgelagert ist. Es existiert ein Optimum von abgesaugtem Massenstrom bei dem eine maximale Wirkungsgradverbesserung erzielt wird.

Weiterhin wird mit der erfindungsgemäßen Lösung auch die Pumpgrenze einer als Verdichter ausgeführten Schaufelradvorrichtung erhöht, wodurch beispielsweise eine Schaufelzahl des Verdichters reduziert oder ein Stufendruckverhältnis angehoben werden kann.

Bei einer vorteilhaften Weiterbildung der Schaufelradvorrichtung weist der Leitungsbereich wenigstens eine Düse auf, über die im Betrieb der Schaufelradvorrichtung Arbeitsfluid der Rotorvorrichtung zuführbar ist. Es können dabei mehrere, in Umfangsrichtung der Schaufelradvorrichtung verteilt angeordnete Düsen oder eine bzw. mehrere sich über einen größeren Winkelbereich von beispielsweise größer 45° erstreckende Düsen oder eine komplett umlaufende Düse vorgesehen sein.

Alternativ hierzu kann es auch vorgesehen sein, dass der im Bereich der Statorvorrichtung über die Absaugeinrichtung der Leckageströmung entnommene Massenstrom für andere Anwendungsfälle verwendet wird. Beispielsweise kann es vorgesehen sein, dass der Massenstrom zur Klimatisierung einer Flugzeugkabine, zur Kühlung einer Turbine, zum Axialkraftausgleich einer Lagerung eines Triebwerks, zur Abdichtung von Lagerräumen, zur Enteisung von Flügeln eines Flugzeugs oder einer Triebwerksgondel oder zur Stabilitätskontrolle eines Verdichters eingesetzt wird. Weiterhin kann es auch vorgesehen sein, dass der der Leckageströmung entnommene Massenstrom in einen Bypasskanal eines Triebwerks eingeleitet wird.

Sowohl die in den Patentansprüchen angegebenen Merkmale als auch die in den nachfolgenden Ausführungsbeispielen der erfindungsgemäßen Statorvorrichtung angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen einer erfindungsgemäßen Statorvorrichtung ergeben sich aus den Patentansprüchen und den nachfolgend unter Bezugnahme auf die in der Zeichnung prinzipmäßig beschriebenen Ausführungsbeispielen, wobei zugunsten der Übersichtlichkeit jeweils für bau- und funktionsgleiche Bauteile dieselben Bezugszeichen verwendet werden.

Es zeigt:
- Fig. 1: eine stark schematisierte Längsschnittansicht eines Ausschnitts eines Strahltriebwerks, wobei ein Verdichter mit mehreren Rotorvorrichtungen und Statorvorrichtungen gezeigt ist, die jeweils in einen Kernstromkanal ragende Schaufeln aufweisen;
- Fig. 2a: einen Ausschnitt einer Leitschaufel einer Statorvorrichtung gemäß Fig. 1, wobei eine mit einem Schaufelblatt verbundene Plattform ersichtlich ist und exemplarisch im Betrieb des Strahltriebwerks auftretende Strömungslinien gezeigt sind, und wobei die Plattform der Leitschaufel von einer Plattform einer in Umfangsrichtung benachbarten Leitschaufel durch eine Gehäuseeinrichtung getrennt ist;
- Fig. 2b: eine der Fig. 2a entsprechende Darstellung der Leitschaufel, wobei die Gehäuseeinrichtung in einem einander zugewandten Bereich der Plattformen von in Umfangsrichtung benachbarten Leitschaufeln eine Ausnehmung aufweist;
- Fig. 3: eine Längsschnittdarstellung durch eine Statorvorrichtung der Fig. 1, wobei eine erste Ausführungsform einer Absaugeinrichtung gezeigt ist, die im Bereich einer Druckseite des Schaufelblatts an einen Strömungsbereich der Leitschaufel grenzt;
- Fig. 4: eine Ansicht von schräg hinten auf die Längsschnittdarstellung der Fig. 3;
- Fig. 5: eine vereinfachte dreidimensionale Ansicht der Statorvorrichtung gemäß Fig. 3 und Fig. 4 von radial innen, wobei die Gehäuseeinrichtung im Bereich der Leitschaufeln ohne die Leitschaufeln der Statorvorrichtung ersichtlich ist;
- Fig. 6 - 9: der Fig. 3 entsprechende Längsschnittdarstellungen durch die Statorvorrichtung der Fig. 1, wobei weitere Ausführungsformen der Absaugeinrichtung gezeigt sind;
- Fig. 10 - 12: der Fig. 3 entsprechende Längsschnittdarstellungen durch die Statorvorrichtung der Fig.1, wobei weitere Ausführungsformen der auf einer Saugseite des Schaufelblatts angeordneten Absaugeinrichtung gezeigt sind;
- Fig. 13: eine Ansicht von schräg hinten auf die Längsschnittdarstellung der Fig. 12;
- Fig. 14: eine vereinfachte dreidimensionale Ansicht der Statorvorrichtung gemäß Fig. 12 und Fig. 13 von radial innen, wobei die Gehäuseeinrichtung im Bereich der Leitschaufeln ohne die Leitschaufeln der Statorvorrichtung ersichtlich ist;
- Fig. 15: eine vereinfachte Längsschnittansicht eines Ausschnitts des Strahltriebwerks gemäß Fig. 1, wobei eine Statorvorrichtung und eine in axialer Richtung des Strahltriebwerks der Statorvorrichtung vorgelagerte Rotorvorrichtung ersichtlich sind, und wobei ein Leitungsbereich vorgesehen ist, der einerseits mit der Absaugeinrichtung verbunden ist und andererseits eine düsenartige Öffnung im Bereich der Rotorvorrichtung aufweist;
- Fig. 16: eine der Fig. 15 entsprechende Längsschnittansicht des Strahltriebwerks, wobei eine alternativ ausgeführte düsenartige Öffnung gezeigt ist;
- Fig. 17: eine vereinfachte dreidimensionale Darstellung einer alternativen Ausführung von Leitungsbereichen, wobei die Gehäuseeinrichtung nicht näher ersichtlich ist;
- Fig. 18: eine weitere dreidimensionale Ansicht des Leitungsbereich der Fig. 17 aus einer anderen Perspektive;
- Fig. 19: eine stark vereinfachte Ansicht des Verdichters des Strahltriebwerks der Fig. 1, wobei zwei über einen Leitungsbereich verbundene Räume ersichtlich sind;
- Fig. 20: eine stark vereinfachte Längsschnittdarstellung durch eine Leitschaufel der Statorvorrichtung der Fig. 1, von der ein in axialer Richtung vorderer Randbereich in den Kernstromkanal ragt; und
- Fig. 21 - 28: verschiedene Ausführungen der Ausschnitte I und II der Fig. 20, welche jeweils verschieden ausgeführte Plattformen der Leitschaufel zeigen.

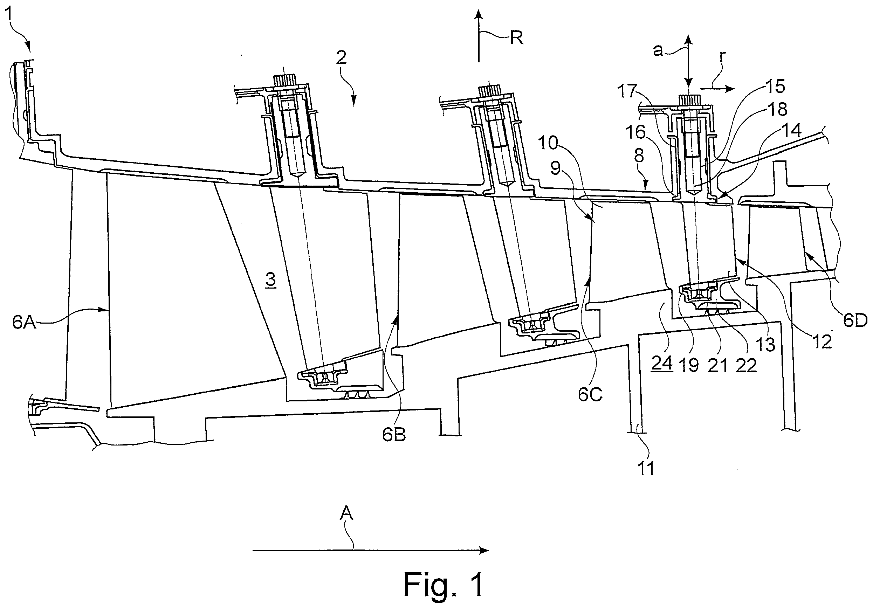

Fig. 1 zeigt einen Ausschnitt einer Strömungsmaschine, die vorliegend als Strahltriebwerk 1 ausgeführt ist, in einer alternativen Ausführung aber auch eine stationäre Gasturbine darstellen kann. In dem Ausschnitt ist ein Ringkanal bzw. Kernstromkanal 3 des Strahltriebwerks 1 im Bereich einer als Hochdruckverdichter 2 ausgeführten Schaufelradvorrichtung gezeigt, wobei verschiedene Stufen 6A, 6B, 6C, 6D des Hochdruckverdichters 2 ersichtlich sind, die jeweils aus einer Rotorvorrichtung 4 und einer in axialer Richtung A des Strahltriebwerks 1 stromab der Rotorvorrichtung 4 angeordneten Statorvorrichtung 5 bestehen.

Im Folgenden werden die Rotorvorrichtung 4 und die Statorvorrichtung 5 der dritten Stufe 6C des Hochdruckverdichters 2 näher beschrieben, wobei die Rotorvorrichtungen 4 und die Statorvorrichtungen 5 der anderen Stufen 6A, 6B, 6D vergleichbar ausgeführt sind.

Die Rotorvorrichtung 4 weist eine Vielzahl von mit Schaufelblättern 10 ausgeführten Laufschaufeleinrichtungen 9 auf, die umfangsseitig verteilt mit einem Scheibenrad 11 wirkverbunden sind und im Betrieb des Strahltriebwerks 1 um eine Zentralachse des Strahltreibwerks 1 rotieren. Die Statorvorrichtung 5 ist dagegen mit einer Vielzahl von ebenfalls jeweils ein Schaufelblatt 13 aufweisenden Leitschaufeln 12 ausgeführt, wobei die jeweils baugleich ausgeführten Leitschaufeln 12 umfangsseitig verteilt in radialer Richtung R des Strahltriebwerks 1 außenseitig an einer Gehäuseeinrichtung 8 angeordnet sind.

Die Schaufelblätter 13 der Leitschaufeln 12 grenzen in radialer Richtung R des Strahltriebwerks 1 nach außen jeweils an eine Plattform 14 bzw. einen sogenannten Penny, wobei die Plattformen 14 den Kernstromkanal 3 in radialer Richtung R des Strahltriebwerks 1 zumindest bereichsweise begrenzen. In radialer Richtung R des Strahltriebwerks 1 nach außen sind die Plattformen 14 jeweils mit einem spindelförmigen Bereich 15 verbunden und vorliegend integral mit diesem ausgeführt, wobei die Plattformen 14 bezüglich einer Mittelachse 18 des spindelförmigen Bereichs 15 einen größeren Querschnitt als der spindelförmige Bereich 15 aufweisen. Die Leitschaufeln 12 sind mit den Plattformen 14 und den spindelförmigen Bereichen 15 in Ausnehmungen 16 der Gehäuseeinrichtung 8 angeordnet, wobei die spindelförmigen Bereiche 15 über Buchsen 17 in den Ausnehmungen 16 gelagert sind.

Die Leitschaufeln 12 sind in den Ausnehmungen 16 der Gehäuseeinrichtung 8 in bekannter Weise um die Mittelachse 18 des spindelförmigen Bereichs 15 verdrehbar angeordnet, wobei die Leitschaufeln 12 beispielsweise über die spindelförmigen Bereiche 15 um einen Winkel zwischen 18° und 45° gegenüber der Gehäuseeinrichtung 8 verdrehbar sind.

Auf einer bezüglich der radialen Richtung R des Strahltriebwerks 1 bzw. der Statorvorrichtung 5 inneren Seite des Schaufelblatts 13 ist ebenfalls eine Plattform 19 vorgesehen, die in analoger Weise wie die Plattform 14 mit einem spindelförmigen Bereich 20 ausgeführt ist und den Kernstromkanal 3 zumindest bereichsweise in radialer Richtung R des Strahltriebwerks 1 begrenzt. Über den spindelförmigen Bereich 20 ist die Leitschaufel 12 wiederum über eine Buchse 21 in einem Gehäuseteil 22, einem sogenannten shroud, gelagert, wobei die Leitschaufel 12 um die Mittelachse 18 gegenüber dem Gehäuseteil 22 drehbar gelagert ist. Das Gehäuseteil 22 ist dabei insgesamt in einer Ausnehmung 24 angeordnet, die von zwei in axialer Richtung A des Strahltriebwerks 1 bzw. der Statorvorrichtung 5 zueinander benachbarten Rotorvorrichtungen 4 gebildet ist. Im Betrieb des Strahltriebwerks 1 rotiert der dem Gehäuseteil 22 zugewandte Bereich der Rotorvorrichtung 4 um die Triebwerksachse, wohingegen der Gehäuseteil 22 bezüglich der Triebwerksachse unbewegt ist.

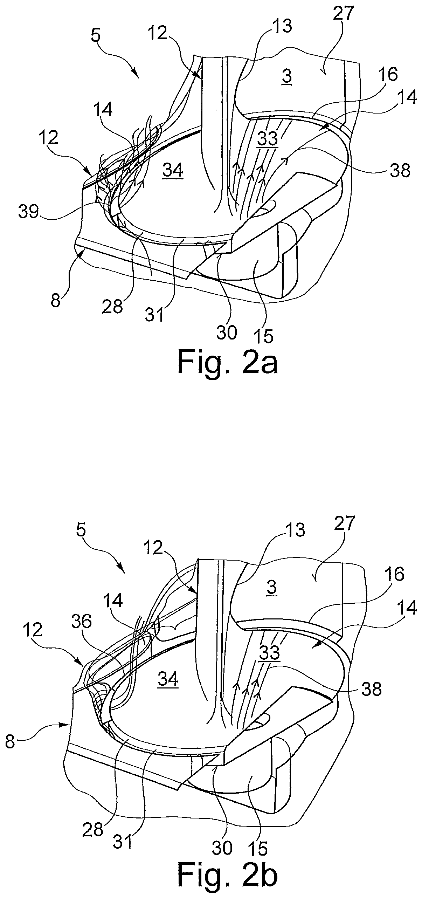

Fig. 2a zeigt die Plattform 14 und den spindelförmigen Bereich 14 einer Leitschaufel 12, wobei ersichtlich ist, dass die mit einem kreisrunden Querschnitt ausgeführte Plattform 14 in der ebenfalls kreisrunden und zu der Mittelachse 18 konzentrischen Ausnehmung 16 gelagert ist. Zwischen der Plattform 14 und der Gehäuseeinrichtung 8 liegt dabei im Bereich einer Oberfläche 27 des Kernstromkanals 3 ein die Mittelachse 18 in radialer Richtung r umlaufender Spalt 28 vor, der sich ausgehend von der Oberfläche 27 des Kernstromkanals 3 in axialer Richtung a der Mittelachse 18 nach außen erstreckt.

Die in Fig. 2b gezeigte Ausführung unterscheidet sich hiervon dadurch, dass die Gehäuseeinrichtung 8 in einem zueinander weisenden Bereich von in Umfangsrichtung U der Zentralachse benachbarten Leitschaufeln 12 ein Ausnehmung 36 aufweist, so dass der Spalt 28 in diesem Bereich von den Plattformen 14 der Leitschaufeln 12 gebildet wird. Da sich die Ausführungen der Fig. 2a und Fig. 2b ansonsten nicht unterscheiden, wird die in der Fig. 2a gezeigte Ausführung im Folgenden stellvertretend für die in der Fig. 2b gezeigte Ausführung beschrieben.

Fig. 2a ist weiterhin zu entnehmen, dass eine dem Kernstromkanal 3 abgewandte Fläche 30 der Plattform 14 in radialer Richtung R des Strahltriebwerks 1 gegenüber der Gehäuseeinrichtung 8 beabstandet ist. Durch diesen Abstand und den Spalt 28 wird ein Strömungsbereich 31 gebildet.

Im Betrieb des Strahltriebwerks 1 steigt ein Druck eines Arbeitsfluids, hier Luft, im Bereich des Hochdruckverdichters 2 in dem Kernstromkanal 3 in axialer Richtung A des Strahltriebwerks 1 in Strömungsrichtung an, so dass ein Druck einer durch den Kernstromkanal 3 strömenden Hauptströmung auf einer stromab gelegenen Druckseite 33 des Schaufelblatts 13 der Leitschaufel 12 größer ist als auf einer stromauf gelegenen Saugseite 34 des Schaufelblatts 13. Aufgrund dieser Druckverhältnisse strömt im Betrieb des Strahltriebwerks 1 ein Teil der Hauptströmung als Leckageströmung von der Druckseite 33 des Schaufelblatts 13 durch den Strömungsbereich 31 zu der Saugseite 34 des Schaufelblatts 13. Die Leckageströmung wird hierbei im Bereich der Druckseite 33 durch den Spalt 28 über die dem Kernstromkanal 3 abgewandte Fläche 30 zu dem Spalt 28 im Bereich der Saugseite 34 geführt. Die im Betrieb auftretende Leckageströmung ist in der Fig. 2a und Fig. 2b exemplarisch durch Strömungslinien 38 gezeigt, wobei vorliegend nur die durch den Bereich 39 aus dem Spalt 28 austretenden Strömungslinien 38 gezeigt sind.

Das Einströmen der Leckageströmung im Bereich der Saugseite 34 des Schaufelblatts 10 in die Hauptströmung führt zu erheblichen Verlusten des Strahltriebwerks 1, da eine Geschwindigkeit der Hauptströmung in diesem Bereich durch die Leckageströmung in unerwünschter Weise reduziert wird und ein sogenanntes Blockage- bzw. Verlustgebiet entsteht.

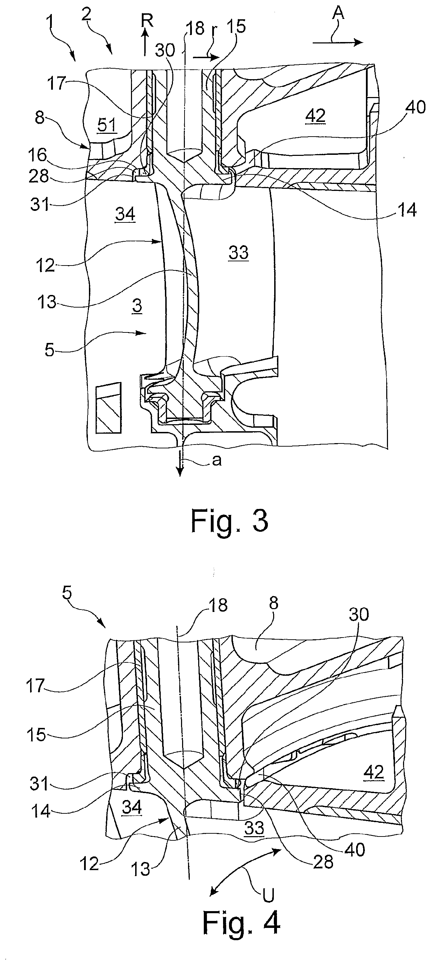

Um einen Massenstrom der Leckageströmung, der im Betrieb des Strahltriebwerks 1 auf der Saugseite 34 des Schaufelblatts 13 in die Hauptströmung eingeleitet wird, zu reduzieren, ist gemäß Fig. 3 bis Fig. 5 eine Absaugeinrichtung 40 vorgesehen, die im Bereich einer der Druckseite 33 des Schaufelblatts 13 zugewandten Seite direkt an den Strömungsbereich 31 grenzt. Gemäß Fig. 3 mündet die Absaugeinrichtung 40 in einem Übergangsbereich in den Strömungsbereich 31, in dem der Spalt 28 mit der Fläche 30 der Plattform 14 verbunden ist. Die Absaugeinrichtung 40 bildet vorliegend einen Kanal, der gegenüber der radialen Richtung R und der axialen Richtung A des Strahltriebwerks 1 einen Winkel von jeweils etwa 45° aufweist. Die Absaugeinrichtung 40 mündet mit einem dem Strömungsbereich 31 abgewandten Ende in einen Raum 42 bzw. ein Plenum, wobei der Raum 42 durch die Gehäuseeinrichtung 8 von dem Kernstromkanal 3 getrennt ist. Der Raum 42 ist in radialer Richtung R des Strahltriebwerks 1 außerhalb des Kernstromkanals 3 und in axialer Richtung A des Strahltriebwerks 1 stromab der Leitschaufeln 12 angeordnet. Ausgehend von dem Strömungsbereich 31 vergrößert sich ein Querschnitt der kanalförmig ausgeführten Absaugeinrichtung 40 vorliegend in Richtung des Raums 42 kontinuierlich.

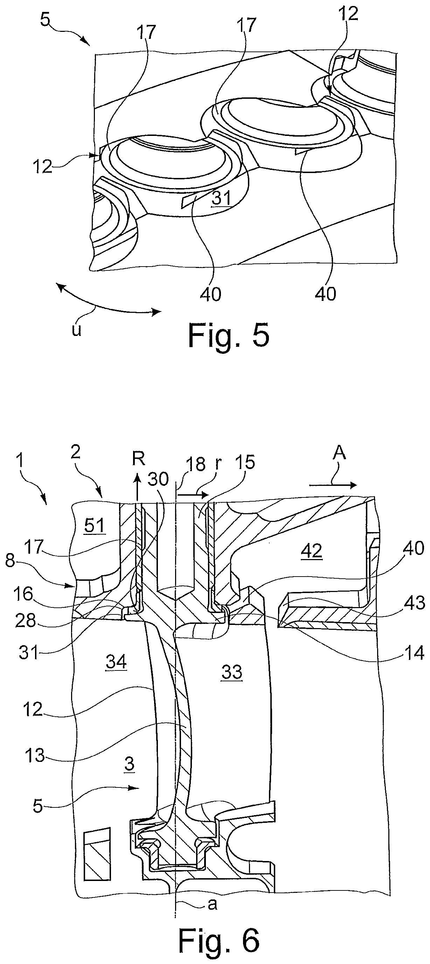

Wie insbesondere Fig. 4 zu entnehmen ist, verläuft die Absaugeinrichtung 40 in Umfangsrichtung U des Strahltriebwerks 1 vollständig umlaufend, so dass die Strömungsbereiche 31 sämtlicher Leitschaufeln 12 der Statorvorrichtung 5 über die Absaugeinrichtung 40 miteinander und mit dem Raum 42 verbunden sind. In Fig. 5 ist dies auch aus einer anderen Perspektive ersichtlich, wobei in dieser Darstellung die Leitschaufeln 12 nicht dargestellt sind. Bezüglich der Umfangsrichtung u der Mittelachse 18 des spindelförmigen Bereichs 15 ist die Absaugeinrichtung 40 über einen Winkelbereich von vorliegend etwa 45° mit dem Strömungsbereich 31 verbunden, so dass auch bei sich in der jeweiligen Endposition befindlicher Leitschaufel 12 eine Verbindung der Absaugeinrichtung 40 mit dem Strömungsbereich 31 sichergestellt ist.

Im Folgenden werden weitere Ausführungsvarianten der Absaugeinrichtung 40 beschrieben, wobei lediglich auf die Unterschiede zu der Absaugeinrichtung 40 näher eingegangen wird.

Die Ausführung gemäß Fig. 6 unterscheidet sich von der Ausführung gemäß Fig. 3 bis Fig. 5 dadurch, dass die Gehäuseeinrichtung 8 stromab des Spalts 28 im Bereich der Druckseite 33 des Schaufelblatts 13 eine Ausnehmung 43 aufweist, über die der Hauptströmung zusätzlich Zapfluft entnommen wird. Die über die Ausnehmung 43 entnommene Zapfluft wird ebenfalls dem Raum 42 zugeführt.

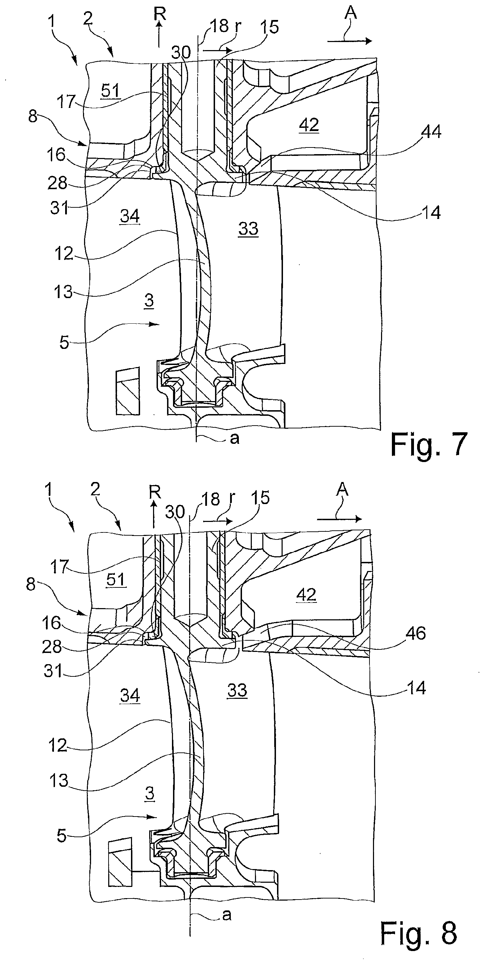

Eine zur der Absaugeinrichtung 40 alternative Gestaltung ist in der Fig. 7 mit der Absaugeinrichtung 44 gezeigt. Die Absaugeinrichtung 44 unterscheidet sich von der Absaugeinrichtung 40 dadurch, dass die Absaugeinrichtung 44 im Bereich des Spalts 28 auf der Druckseite 33 des Schaufelblatts 13 direkt an den Kernstromkanal 3 grenzt, wobei sich die Absaugeinrichtung 44 ausgehend von dem Kernstromkanal 3 wiederum im Wesentlichen mit einem Winkel von 45° sowohl gegenüber der radialen Richtung R als auch der axialen Richtung A des Strahltriebwerks 1 in der Gehäuseeinrichtung erstreckt und vergleichbar zu der Absaugeinrichtung 40 in den Raum 42 mündet. Ein Querschnitt der kanalförmigen Absaugeinrichtung 44 erweitert sich dabei ausgehend von dem Strömungsbereich 31 wiederum kontinuierlich.

Analog zu der Absaugeinrichtung 44 grenzt die in Fig. 8 dargestellte Absaugeinrichtung 46 wiederum direkt an den Kernstromkanal 3, wobei die kanalförmig ausgeführte Absaugeinrichtung gegenüber der axialen Richtung A des Strahltriebwerks 1 einen Winkel von etwa 30° aufweist und einen gegenüber der Absaugeinrichtung 44 vergrößerten Strömungsquerschnitt aufweist. Zudem ist ein Strömungsquerschnitt der Absaugeinrichtung 46 ausgehend von dem Strömungsbereich 31 bis zu dem Raum 42 vorliegend im Wesentlichen konstant.

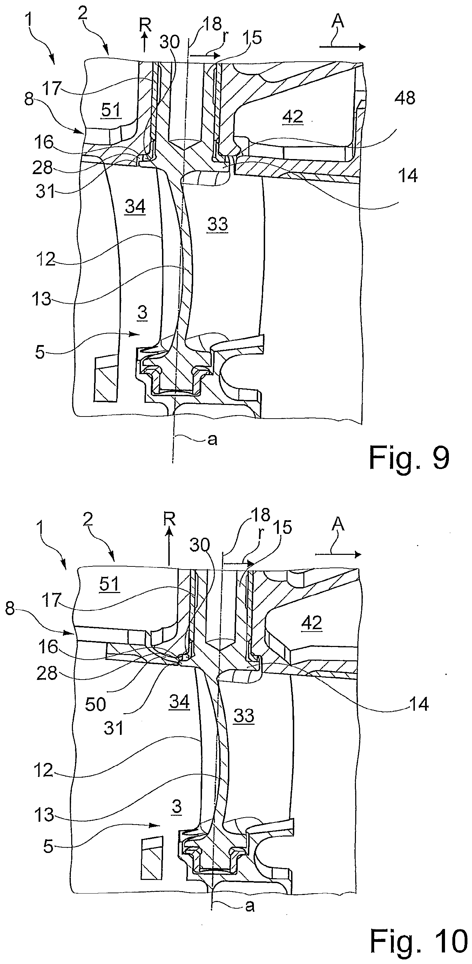

Bei der Ausführung gemäß Fig. 9 verläuft die Absaugeinrichtung 48 ausgehend von dem Spalt 28 im Bereich der Druckseite 33 des Schaufelblatts 13 im Wesentlichen in radialer Richtung R des Strahltriebwerks 1 nach außen und mündet direkt in den Raum 42. Im Unterschied zu den vorhergehend beschriebenen Absaugeinrichtungen 40, 44, 46 verläuft die Absaugeinrichtung 48 nicht in Umfangsrichtung U des Strahltriebwerks 1 umlaufend, sondern ist im Wesentlichen konzentrisch zu der Mittelachse 18 des spindelförmigen Bereichs 15 angeordnet und erstreckt sich über einen Winkelbereich von beispielsweise 45° um die Mittelachse 18. Bei dieser Ausführung ist somit jeder Leitschaufel 12 der Statorvorrichtung 5 eine separate Absaugeinrichtung 48 zugeordnet, die jeweils mit dem Raum 42 verbunden sind.

In den Fig. 10 bis Fig. 12 sind weitere Ausführungsvarianten von Absaugeinrichtungen 50, 52, 54 gezeigt, wobei die im Folgenden näher beschriebenen Absaugeinrichtungen 50, 52, 54 im Unterschied zu den Absaugeinrichtungen 40, 44, 46, 48 im Bereich der Saugseite 34 des Schaufelblatts 13 mit dem Strömungsbereich 31 verbunden sind. Ansonsten können die Absaugeinrichtungen 50, 52, 54 im Wesentlichen vergleichbar zu den Absaugeinrichtungen 40, 44, 46, 48 ausgeführt sein.

Die Absaugeinrichtung 50 gemäß Fig. 10 grenzt in einem dem Kernstromkanal 3 abgewandten Bereich an den Strömungsbereich 31 und erstreckt sich ausgehend hiervon mit einer Krümmung in radialer Richtung R des Strahltriebwerks 1 nach außen zu einem Raum 51, der analog zu dem Raum 42 durch die Gehäuseeinrichtung 8 von dem Kernstromkanal 3 getrennt ist, allerdings in axialer Richtung A des Strahltriebwerks 1 stromauf der Leitschaufel 12 angeordnet ist. Die kanalförmig ausgeführte Absaugeinrichtung 50 erstreckt sich bezüglich der Zentralachse des Strahltriebwerks 1 in Umfangsrichtung U umlaufend, wobei ein Querschnitt der Absaugeinrichtung 50 ausgehend von dem Strömungsbereich 31 bis zu einem Mündungsbereich in den Raum 51 im Wesentlichen konstant ist.

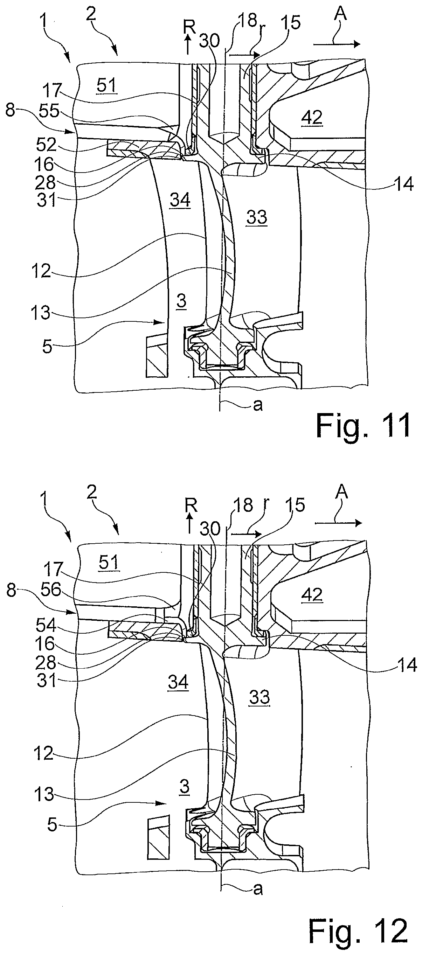

Die in Fig. 11 dargestellte Absaugeinrichtung 52 ist wiederum kanalförmig ausgeführt und verlängert den Spalt 28 in radialer Richtung R des Strahltriebwerks 1 nach außen, wobei die Absaugeinrichtung 52 über eine Krümmung bezüglich der axialen Richtung A des Strahltriebwerks 1 in Strömungsrichtung der Hauptströmung in den Raum 51 mündet. Bei der Ausführung gemäß Fig. 11 sind in Umfangsrichtung U des Strahltriebwerks 1 verteilt mehrere Stege 55 vorgesehen, über welche Teile der Gehäuseeinrichtung 8 aus Stabilitätsgründen miteinander verbunden sind, wobei vorliegend jeweils in einem Bereich zwischen zwei Leitschaufeln 12 ein Steg 55 angeordnet ist.

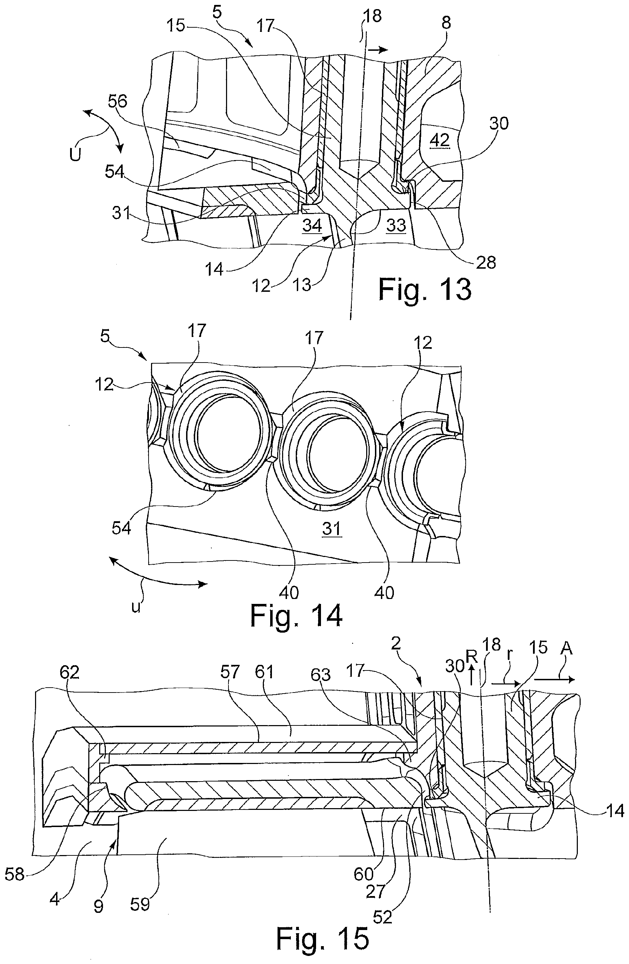

Die Absaugeinrichtung 54 der Fig. 12 bis Fig. 14 ist im Wesentlichen vergleichbar zu der Absaugeinrichtung 52 ausgeführt. Insbesondere in Fig. 13 sind dabei wiederum Stege 56 vorgesehen, die gegenüber den Stegen 55 eine größere Erstreckung in Umfangsrichtung U des Strahltriebwerks 1 aufweisen. Neben der gezeigten Ausführung können sich die Stege 55, 56 je nach Anwendungsfall in Umfangsrichtung U des Strahltriebwerks 1 auch über einen größeren oder einen kleineren Bereich erstrecken. Wie der Fig. 14 zu entnehmen ist, ist die Absaugeinrichtung 54 bezüglich der Mittelachse 18 über einen Winkelbereich von etwa 30° mit dem Strömungsbereich 31 verbunden.

Der im Betrieb des Strahltriebwerks 1 über die jeweilige Absaugeinrichtung 40, 44, 46, 48, 50, 52, 54 der Leckageströmung entnommene Massenstrom kann prinzipiell für verschiedenartige Anwendungsfälle verwendet werden, wobei der Massenstrom analog zu von der Hauptströmung in herkömmlicher Weise entnommener Zapfluft eingesetzt werden kann.

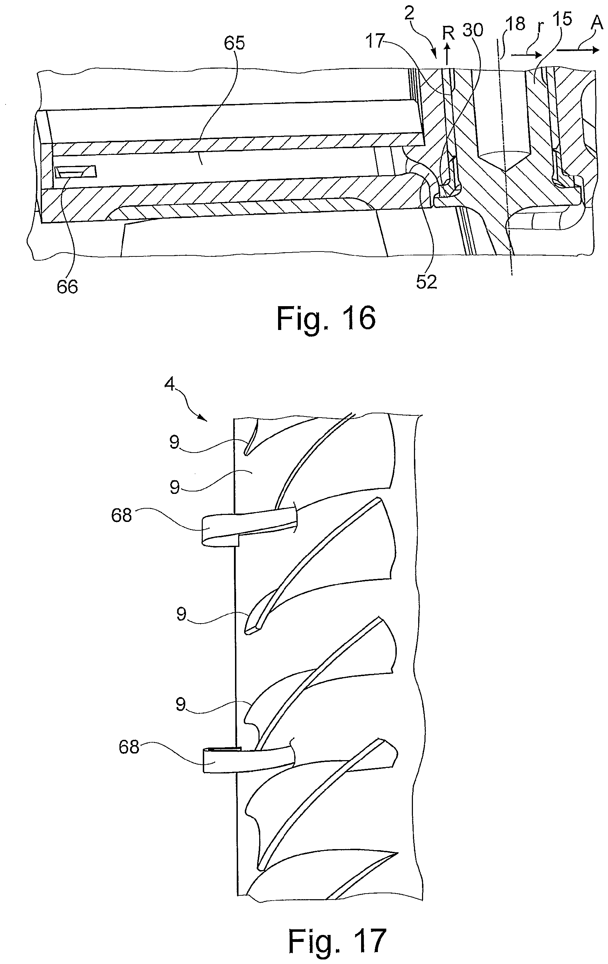

In Fig. 15 und Fig. 16 werden die der Leckageströmung entnommenen Massenströme über eine Absaugeinrichtung 52 gemäß Fig. 11 einem Leitungsbereich 57 zugeführt, der sich im Wesentlich in axialer Richtung A des Strahltriebwerks 1 stromauf zu einer der Statorvorrichtung 5 direkt vorgelagerten Rotorvorrichtung 4 erstreckt. Der Leitungsbereich 57 ist vorliegend durch einen eine Oberfläche 27 des Kernstromkanals 3 bildenden Teil 60 der Gehäuseeinrichtung 8 und einen Teil 61 der Gehäuseeinrichtung 8 gebildet, der vorliegend im Wesentlichen plattenförmig ausgeführt und hier mit Abstützelementen 62, 63 der Gehäuseeinrichtung 8 verbunden ist.

Der Leitungsbereich 57 verläuft vorliegend in Umfangsrichtung U des Strahltriebwerks 1 umlaufend. Der über den Leitungsbereich 57 geführte Massenstrom wird über eine sich ebenfalls in Umfangsrichtung U des Strahltriebwerks 1 umlaufend erstreckende Düse 58 im Bereich von Rotorspitzen 59 der Laufschaufeleinrichtungen 9 in die Hauptströmung geleitet. Durch die Einleitung von impulsreicher Strömung in den Bereich der Rotorspitzen 59 wird im Betrieb des Strahltriebwerks 1 für die Rotorspitzen 59 stabilisierende Wirkung dadurch erzielt, dass der in die Hauptströmung eingeleitete Massenstrom mit einer im Bereich der Rotorspitzen 59 vorliegenden Strömung derart interagiert, dass in diesem Bereich auftretende Verwirbelungen verringert werden.

In Fig. 16 ist ein Ausschnitt der Stufe 6C des Hochdruckverdichters 2 gezeigt, der demjenigen der Fig. 15 entspricht. Fig. 16 unterscheidet sich von Fig. 15 lediglich durch die Ausführung des Leitungsbereichs 65, der im Wesentlichen dem Leitungsbereich 57 der Fig. 15 entspricht, im Unterschied zu dem Leitungsbereich 57 allerdings in einem den Rotorspitzen 59 zugewandten Endbereich eine Vielzahl von Düsen 66 aufweist, die über den Umfang des Leitungsbereichs 65 verteilt angeordnet sind.

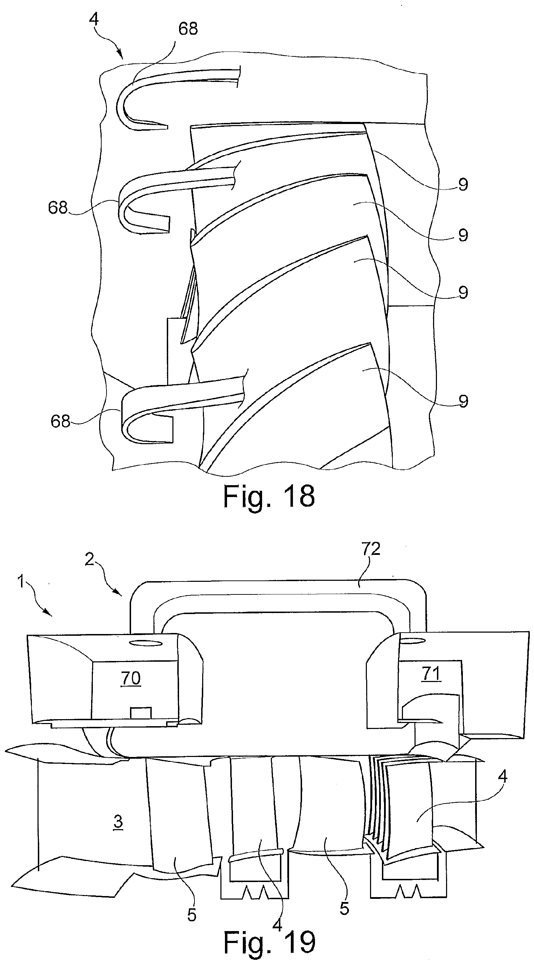

Eine weitere Alternative ist in Fig. 17 und Fig. 18 gezeigt, wobei hier die Gehäuseeinrichtung 8 nicht dargestellt ist. Hierbei sind eine Vielzahl von baugleich ausgeführten Leitungsbereichen 68 vorgesehen, über die jeweils ein dem Strömungsbereich 31 entnommener Massenstrom den Rotorspitzen 57 der Laufschaufeleinrichtungen 9 zuführbar ist.

In Fig. 19 ist ein stark vereinfachter Ausschnitt des Hochdruckverdichters 2 des Strahltriebwerks 1 gezeigt, wobei ersichtlich ist, dass in axialer Richtung A des Strahltriebwerks 1 vorliegend zwei Räume 70, 71 vorgesehen sind, die über einen Leitungsbereich 72 miteinander verbunden sind. Den Räumen 70, 71 kann in oben näher beschriebener Weise über Absaugeinrichtungen 40, 44, 46, 48, 50, 52, 54 jeweils ein der Leckageströmung entnommener Massenstrom zugeführt werden. Prinzipiell können auf derartige Weise beliebige Räume 70, 71 miteinander verbunden werden und ein Massenstrom aus einem dieser Räume 70 einem gewünschten Verwendungsort zugeführt werden. Über die Räume 70, 71 ist beispielsweise der Leckageströmung über eine Absaugeinrichtung 40, 44, 46, 48, 50, 52, 54 entnommener Massenstrom in axialer Richtung A des Strahltriebwerks 1 stromauf förderbar und beispielsweise einer Rotorvorrichtung 4 in oben näher beschriebener Weise zuführbar.

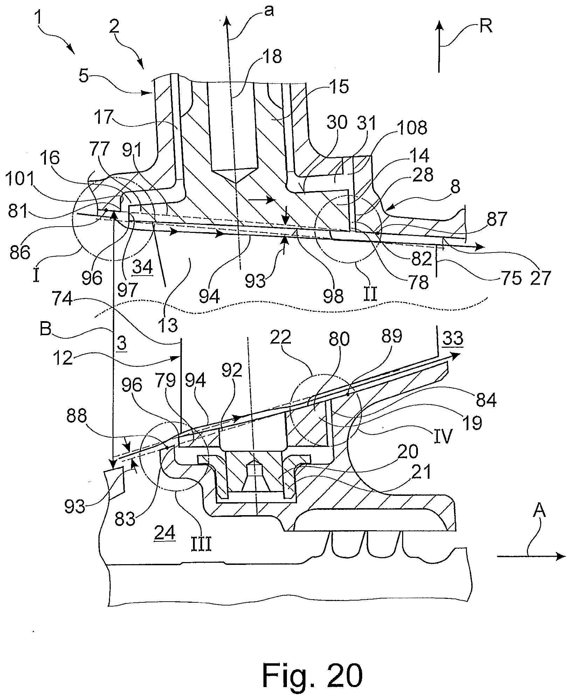

Zu dem Vorsehen der Absaugeinrichtungen 40, 44, 46, 48, 50, 52, 54 zusätzliche Möglichkeiten zur Reduzierung einer Leckageströmung in dem Strömungsbereich sind in Fig. 20 bis Fig. 28 ersichtlich. In der Längsschnittdarstellung gemäß Fig. 20 der Leitschaufel 12 durch die Mittelachse 18 ist sowohl die Plattform 14 mit dem spindelförmigen Bereich 15 in einem in radialer Richtung R des Strahltriebwerks 1 äußeren Bereich des Kernstromkanals 3 als auch die Plattform 19 und der spindelförmige Bereich 20 in einem in radialer Richtung R des Strahltriebwerks 1 inneren Bereich des Kernstromkanals 3 und das die Plattformen 14 und 15 verbindende Schaufelblatt 13 ersichtlich. Weiterhin ist eine Vorderkante 74 des Schaufelblatts 13, die in axialer Richtung A des Strahltriebwerks 1 stromauf gewandt ist, und eine Hinterkante 75 des Schaufelblatts 13, die in axialer Richtung A des Strahltriebwerks 1 stromab gewandt ist, gezeigt.

Die Plattformen 14, 19 weisen einen in axialer Richtung A des Strahltriebwerks 1 stromauf gewandten vorderen Randbereich 77 bzw. 79 mit einem vorderen Ende 81 bzw. 83 und einen in axialer Richtung A des Strahltriebwerks 1 stromab angeordneten hinteren Randbereich 78 bzw. 80 mit einem hinteren Ende 82 bzw. 84 auf, wobei auch der durch den Spalt 28 und den Abstand der Fläche 30 der Plattform 14 bzw. 19 in radialer Richtung R des Strahltriebwerks 1 von der Gehäuseeinrichtung 8 bzw. dem Gehäuseteil 22 gebildete Strömungsbereich 31 ersichtlich ist. Mit Pfeilen 94 ist dabei die Strömungsrichtung der Leckageströmung sowohl im Bereich der Plattform 14 als auch im Bereich der Plattform 19 gezeigt.

In Fig. 20 sind Referenzpunkte 86 bzw. 88 stromauf der Plattform 14 bzw. 19 und Referenzpunkte 87 bzw. 89 stromab der Plattform 14 bzw. 19 ersichtlich, wobei die Referenzpunkte 86 und 88 einen Abstand stromauf zu dem vorderen Ende 81 bzw. 83 aufweisen, der etwa 10 % einer Erstreckung der Plattform 14 bzw. 19 in axialer Richtung A des Strahltriebwerks 1 beträgt. Die Referenzpunkte 87 und 89 weisen einen stromabseitigen Abstand von dem hinteren Ende 82 bzw. 84 der Plattform 14 bzw. 19 auf, der etwa 10 % der Erstreckung der Plattform 14 bzw. 19 in axialer Richtung A des Strahltriebwerks 1 entspricht. Die Referenzpunkte 86 bis 89 sind dabei jeweils auf der Oberfläche 27 des Kernstromkanals 3 angeordnet. Mit dem Bezugszeichen 91 ist eine geradlinige Verbindung der Referenzpunkte 86 und 87 der Plattform 14 und mit dem Bezugszeichen 92 eine geradlinige Verbindung der Referenzpunkte 88 und 89 der Plattform 19 bezeichnet.

Ein den vorderen Randbereich 77 der Plattform 14 näher darstellender Ausschnitt ist mit dem Bezugszeichen I versehen, wohingegen ein den hinteren Randbereich 78 der Plattform 14 umfassender Ausschnitt mit dem Bezugszeichen II bezeichnet ist. In vergleichbarer Weise ist ein den vorderen Randbereich 79 der Plattform 19 umfassender Ausschnitt mit III und ein den hinteren Randbereich 80 der Plattform 19 umfassender Ausschnitt mit IV bezeichnet.

Bei den Ausführungen gemäß der Fig. 20 bis Fig. 23 ragt der vordere Randbereich 77 der Plattform 14 in radialer Richtung R des Strahltriebwerks 1 gegenüber der Verbindung 91 um eine Erstreckung 93 in den Kernstromkanal 3, wohingegen der hintere Randbereich 78 der Plattform 14 in radialer Richtung R des Strahltriebwerks 1 nicht in den Kernstromkanal 3 hineinragt, sondern im Wesentlichen fluchtend zu der Gehäuseeinrichtung 8 angeordnet ist. Der sich in den Kernstromkanal 3 erstreckende Randbereich 77 kann sich in Umfangsrichtung u der Mittelachse 18 über einen Winkelbereich von beispielsweise 20° bis etwa 180° erstrecken, wobei insbesondere ein fließender Übergang zwischen dem vorderen Randbereich 77, der sich in den Kernstromkanal 3 erstreckt und dem hinteren Randbereich 78 der Plattform 14, der sich nicht in den Kernstromkanal 3 erstreckt, vorgesehen ist.

Durch den in den Kernstromkanal 3 ragenden Randbereich 77 der Plattform 14 wird eine Hauptströmung in dem Kernstromkanal 3 im Bereich der Oberfläche 27 der Gehäuseeinrichtung 8 gemäß der schematisch dargestellten Strömungslinie 95 umgelenkt, wodurch ein Teil des dynamischen Drucks in diesem der Saugseite 34 des Schaufelblatts 13 zugewandten Bereich in statischen Druck umgewandelt wird. Der erhöhte statische Druck in diesem Bereich hat zur Folge, dass eine Druckdifferenz zwischen einem statischen Druck im Bereich des Spalts 28 auf der Druckseite 33 des Schaufelblatts 13 und dem statischen Druck im Bereich des Spalts 28 auf der Saugseite 34 des Schaufelblatts 13 gegenüber einer Ausführung mit nicht in den Kernstromkanal 3 ragendem vorderen Randbereich 77 der Plattform 14 reduziert ist. Hierdurch wird im Betrieb des Strahltriebwerks 1 der durch den Strömungsbereich 31 geführte Massenstrom reduziert, so dass ein geringerer Massenstrom aus dem Strömungsbereich 31 in die Hauptströmung eintritt. Hierdurch werden wiederum Verluste in diesem Bereich reduziert, wodurch ein Wirkungsgrad des Strahltriebwerks 1 verbessert ist.

Bei der Ausführung gemäß Fig. 20 ist im Bereich des vorderen Endes 81 der Plattform 14 in einem Übergangsbereich zwischen einer sich im Wesentlichen in radialer Richtung R des Strahltriebwerks 1 erstreckenden Seitenfläche 97 und einer dem Kernstromkanal 3 zugewandten Fläche 98 eine scharfe Kante 96 vorgesehen. Aus Fertigungsgesichtspunkten kann die Kante 96 mit einem geringen Radius versehen sein.

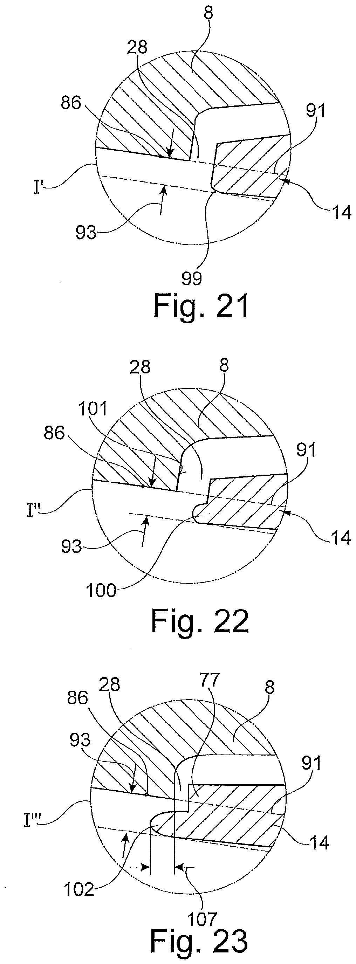

Bezugnehmend auf Fig. 21 ist eine der Ausführung der Fig. 20 entsprechende Variante gezeigt, welche sich lediglich von den Bereichen I und III der Fig. 20 unterscheidet. Wie im Bereich I' ersichtlich ist, ist in dem Übergangsbereich zwischen der sich im Wesentlichen in radialer Richtung R des Strahltriebwerks 1 erstreckenden Seitenfläche 97 und der dem Kernstromkanal 3 zugewandten Fläche 98 ein größerer Radius 99 vorgesehen. Der dem Ausschnitt III der Fig. 20 entsprechende Bereich der Plattform 19 ist im Wesentlichen horizontal gespiegelt zu dem Ausschnitt I' ausgebildet.

Gemäß der Ausführung nach Fig. 22 ist der Ausschnitt I" alternativ zu der Ausführung nach Fig. 20 gestaltet, wobei in dem Übergangsbereich zwischen der sich im Wesentlichen in radialer Richtung R des Strahltriebwerks 1 erstreckenden Seitenfläche 97 und der dem Kernstromkanal 3 zugewandten Fläche 98 ein als Nase 100 ausgeführter Überhang angeordnet ist. Somit weist die Plattform 14 im Bereich der Fläche 98 eine größere Erstreckung in axialer Richtung A des Strahltriebwerks 1 auf als im Bereich der Seitenfläche 97. Ein vorderes Ende 81 der Plattform 14 im Bereich der Nase 100 ist hierbei bezüglich der axialen Richtung A des Strahltriebwerks 1 etwa auf Höhe einer den Spalt 28 begrenzenden Seitenwand 101 der Gehäuseeinrichtung 8 angeordnet. Durch die beschriebene Ausführung der Nase 100 wird erreicht, dass die im Bereich der Saugseite 33 des Schaufelblatts 13 aus dem Spalt 28 austretende Leckageströmung nicht direkt in radialer Richtung R des Strahltriebwerks 1 in die Hauptströmung eintritt, sondern zuvor im Bereich der Nase 100 aufgestaut wird. Hierdurch wird ein statischer Druck in diesem Bereich mit den oben näher beschriebenen vorteilhaften Wirkungen für die Leckageströmung weiter erhöht. Weiterhin wird die aus dem Spalt 28 austretende Leckageströmung vor einer Einleitung in die Hauptströmung um die Nase 100 herum umgelenkt und beschleunigt, so dass die Leckageströmung nur in vorteilhafterweise geringem Umfang mit der Hauptströmung wechselwirkt. Der dem Ausschnitt III der Fig. 20 entsprechende Bereich der Plattform 19 ist auch bei der Gestaltung gemäß Fig. 22 im Wesentlichen horizontal gespiegelt zu dem Ausschnitt I" ausgebildet.

In Fig. 23 weist die Plattform 14 in dem vorderen Randbereich 77 wiederum einen als Nase 102 ausgeführten Überhang auf, wie der alternativ zu dem Bereich I der Fig. 20 gestaltete Ausschnitt I"' in Fig. 23 zeigt. Dabei ist die Nase 102 prinzipiell vergleichbar zu der Nase 100 ausgeführt. Im Unterschied zu der Nase 100 gemäß Fig. 22 weist die Nase 102 allerdings eine bezüglich der axialen Richtung A des Strahltriebwerks 1 größere Erstreckung auf, so dass die Nase 102 die Gehäuseeinrichtung 8 gegenüber der Seitenfläche 101 in axialer Richtung A des Strahltriebwerks 1 um eine Länge 107 übergreift. Durch eine derartige Ausführung der Nase 102 wird im Bereich des Spalts 28 eine größere Erhöhung des statischen Drucks erreicht als mit der Nase 100. Auch bei der Gestaltung gemäß Fig. 23 ist der dem Ausschnitt III der Fig. 20 entsprechende Bereich der Plattform 19 im Wesentlichen horizontal gespiegelt zu dem Ausschnitt I"' ausgebildet.

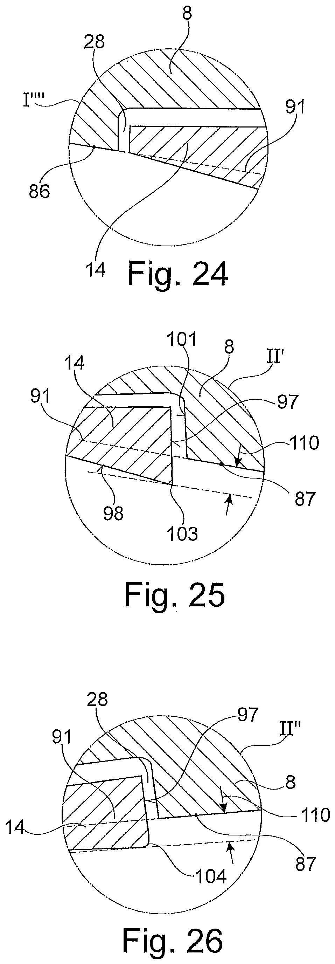

In Fig. 24 ist mit I"" eine alternative Ausführung des Ausschnitts I der Fig. 20 gezeigt, bei der der vordere Randbereich 77 der Plattform 14 in radialer Richtung R des Strahltriebwerks 1 eine im Wesentlichen der Verbindung 91 in diesem Bereich entsprechende Erstreckung aufweist. Die Ausführung I"" gemäß Fig. 24 ist mit den in den Fig. 25 bis Fig. 28 gezeigten Ausführungsvarianten II' bis II"" des hinteren Randbereichs 78 der Plattform 14 kombinierbar. Bei sämtlichen nachfolgenden Ausführungsvarianten kann der vordere Randbereich 79 der Plattform 19 entsprechend dem Ausschnitt III in Fig. 20 horizontal gespiegelt zu dem vorderen Randbereich 77 der Plattform 14 ausgeführt sein. Ebenso kann der hintere Randbereich 80 der Plattform 19 entsprechend dem Ausschnitt IV in Fig. 20 horizontal gespiegelt zu dem hinteren Randbereich 78 der Plattform 14 ausgeführt sein.

Gemäß den Ausschnitten II' bis II"" der Fig. 25 bis Fig. 28 ragt der hintere Randbereich 78 der Plattform 14 in radialer Richtung R des Strahltriebwerks 1 gegenüber der Verbindung 91 um eine Erstreckung 110 in den Kernstromkanal 3. Der sich in den Kernstromkanal 3 erstreckende Randbereich kann sich in Umfangsrichtung u der Mittelachse 18 wiederum über einen Winkelbereich von beispielsweise 20° bis etwa 180° erstrecken, wobei insbesondere ein fließender Übergang zwischen dem den hinteren Randbereich 78 umfassenden Randbereich, der sich in den Kernstromkanal 3 erstreckt, und einem den vorderen Randbereich 77 umfassenden Randbereich der Plattform 14, der sich nicht in den Kernstromkanal 3 erstreckt, vorgesehen ist.

Durch den in den Kernstromkanal 3 ragenden Randbereich 78 der Plattform 14 wird eine Hauptströmung in dem Kernstromkanal 3 im Bereich der Oberfläche 27 der Gehäuseeinrichtung 8 gemäß der schematisch dargestellten Strömungslinie 95 durch den in den Kernstromkanal 3 ragenden hinteren Randbereich 78 umgelenkt, wodurch ein Teil des statischen Drucks in diesem, der Druckseite 33 des Schaufelblatts 13 zugewandten Bereich, in dynamischen Druck umgewandelt wird. Der reduzierte statische Druck in diesem Bereich hat zur Folge, dass eine Druckdifferenz zwischen dem statischen Druck im Bereich des Spalts 28 auf der Druckseite 33 des Schaufelblatts 13 und dem statischen Druck im Bereich des Spalts 28 auf der Saugseite 34 des Schaufelblatts 13 gegenüber einer Ausführung mit nicht in den Kernstromkanal 3 ragendem hinteren Randbereich 78 der Plattform 14 reduziert ist. Dies hat zur Folge, dass auch der im Betrieb des Strahltriebwerks 1 durch den Strömungsbereich 31 geführte Massenstrom reduziert ist. Da hierdurch ein geringerer Massenstrom aus dem Strömungsbereich 31 in die Hauptströmung eintritt, sind Verluste in diesem Bereich reduziert, wodurch wiederum ein Wirkungsgrad des Strahltriebwerks 1 verbessert ist.

Im Ausschnitt II' gemäß Fig. 25 ist in einem Übergangsbereich zwischen der sich im Wesentlichen in radialer Richtung R des Strahltriebwerks 1 erstreckenden Seitenfläche 97 und der dem Kernstromkanal 3 zugewandten Fläche 98 eine scharfe Kante 103 vorgesehen, die insbesondere aus Fertigungsgesichtspunkten mit einem kleinen Radius versehen sein kann.

Im Unterschied hierzu ist bei der Ausführung des Bereichs II" gemäß Fig. 26 in dem Übergangsbereich zwischen der sich im Wesentlichen in radialer Richtung R des Strahltriebwerks 1 erstreckenden Seitenfläche 97 und der dem Kernstromkanal 3 zugewandten Fläche 98 ein größerer Radius 104 vorgesehen.

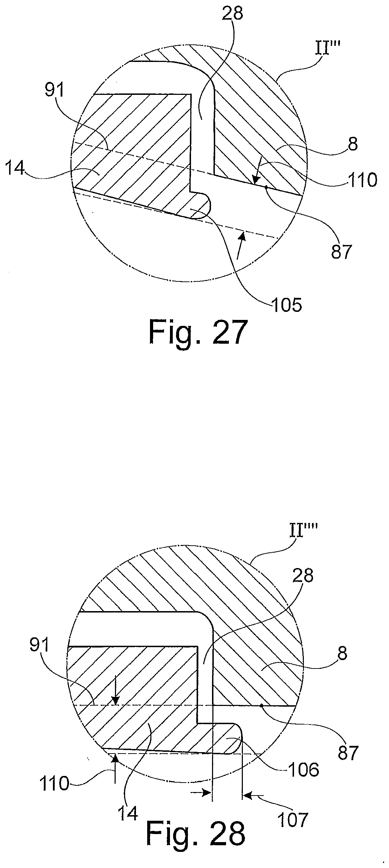

Gemäß der Ausschnitte II"' gemäß Fig. 27 und II"" in Fig. 28 ist in dem Übergangsbereich zwischen der sich im Wesentlichen in radialer Richtung R des Strahltriebwerks 1 erstreckenden Seitenfläche 97 und der dem Kernstromkanal 3 zugewandten Fläche 98 jeweils ein als Nase 105 bzw. 106 ausgeführter Überhang angeordnet, wobei die jeweilige Nase 105 bzw. 106 im Wesentlichen spiegelsymmetrisch bzw. vertikal gespiegelt zu der Nase 100 bzw. der Nase 102 ausgeführt ist.

Neben den bisher beschriebenen Ausführungsvarianten, bei denen sich entweder der vordere Randbereich 77 bzw. 79 oder der hintere Randbereich 78 bzw. 80 der Plattform 14 bzw. 19 in den Kernstromkanal 3 erstreckt, kann es auch vorgesehen sein, dass sowohl der vordere Randbereich 77 bzw. 79 als auch der hintere Randbereich 78 bzw. 80 der Plattform 14 bzw. 19 gegenüber der Verbindung 91 bzw. 92 in radialer Richtung R des Strahltriebwerks 1 in den Kernstromkanal 3 ragen. Hierdurch tritt im Bereich des Spalts 28 auf der Saugseite 34 des Schaufelblatts 13 in oben näher beschriebener Weise eine Druckerhöhung und im Bereich des Spalts 28 auf der Druckseite 33 des Schaufelblatts 13 in oben näher beschriebener Weise eine Druckreduzierung auf, so dass ein Druckgradient aus einem Druck im Bereich eines Eintritts der Leckageströmung in den Strömungsbereich 31 zu einem Druck im Bereich eines Austritts der Leckageströmung aus dem Strömungsbereich 31 weiter reduziert ist. Hierdurch wird im Betrieb des Strahltriebwerks 1 ein durch den Strömungsbereich 31 strömender Massenstrom weiter reduziert.

Prinzipiell können die Plattformen 14, 19 in den Ausschnitten I, II, III und IV beliebige Kombinationen der hierzu jeweils beschriebenen Ausführungsvarianten bilden. Der Übergangsbereich von der Seitenfläche 97 der Plattform 14 zu der Fläche 98 der Plattform 14 ist insbesondere in dem vorderen Randbereich 77 bzw. 79 vergleichbar zu dem hinteren Randbereich 78 bzw. 80 ausgeführt. Der in den Kernstromkanal 3 ragende Randbereich 77, 78 der Plattform 14 bzw. der in den Kernstromkanal 3 ragende Randbereich 79, 80 der Plattform 19 ist dabei in Umfangsrichtung u der Mittelachse 18 vorzugsweise komplett umlaufend ausgeführt. Alternativ hierzu kann der Übergangsbereich von der Seitenfläche 97 zu der Fläche 98 der Plattform aber auch in dem vorderen Randbereich 77 bzw. 79 anders ausgeführt sein als in dem hinteren Randbereich 78 bzw. 80.

Die Erstreckung 93 im vorderen Randbereich 77 bzw. 79 und die Erstreckung 110 im hinteren Randbereich 78 bzw. 80 können sowohl einen einander entsprechenden Wert aufweisen. Alternativ hierzu kann eine der Erstreckungen 93 bzw. 110 größer als die andere Erstreckung 110 bzw. 93 sein.

Die Erstreckung 93 bzw. die Erstreckung 110 des in den Kernstromkanal 3 ragenden Randbereichs 77, 78, 79, 80 beträgt vorliegend etwa 0,8 % einer Breite B des Kernstromkanals 3 senkrecht zur axialen Richtung A des Strahltriebwerks 1 im Bereich des Randbereichs 77, 78, 79, 80.

Wie in Fig. 20 dargestellt, kann an den Strömungsbereich 31 im Bereich der Druckseite 33 des Schaufelblatts 13 und/oder im Bereich der Saugseite 34 des Schaufelblatts eine Absaugeinrichtung 108 grenzen. Im Prinzip ist jede der in den Fig. 20 bis Fig. 28 beschriebenen Ausführung mit einer oder mehreren der in den Fig. 3 bis Fig. 14 gezeigten Absaugeinrichtungen 40, 44, 46, 48, 50, 52 oder 54 kombinierbar.

Ebenso kann es vorgesehen sein, dass die in den Fig. 3 bis Fig. 18 gezeigten Plattformen 14 bzw. 19 gemäß den Ausführungen nach Fig. 20 bis Fig. 30 in den Kernstromkanal 3 ragen. Durch die Kombination der in den Kernstromkanal 3 ragenden Plattform 14, mit einer Absaugeinrichtung 40, 44, 46, 48, 50, 52, 54, 108 ist ein Wirkungsgrad des Strahltriebwerks 1 vorteilhafterweise weiter erhöht, da sich die Wirkung der Absaugeinrichtung 40, 44, 46, 48, 50, 52, 54, 108 mit der Wirkung der in den Kernstromkanal ragenden Plattform 14, 19 addiert.

### Bezugszeichenliste

- 1: Strömungsmaschine; Strahltriebwerk
- 2: Schaufelradvorrichtung; Hochdruckverdichter
- 3: Kernstromkanal
- 4: Rotorvorrichtung
- 5: Statorvorrichtung
- 6A bis 6D: Stufen des Hochdruckverdichters
- 8: Gehäuseeinrichtung
- 9: Laufschaufeleinrichtung
- 10: Schaufelblatt der Laufschaufeleinrichtung
- 11: Scheibenrad
- 12: Leitschaufel
- 13: Schaufelblatt der Leitschaufel
- 14: Plattform
- 15: spindelförmiger Bereich
- 16: Ausnehmung der Gehäuseeinrichtung
- 17: Buchse
- 18: Mittelachse
- 19: Plattform
- 20: spindelförmiger Bereich
- 21: Buchse
- 22: Gehäuseteil
- 24: Ausnehmung
- 27: Oberfläche des Kernstromkanals
- 28: Spalt
- 30: Fläche der Plattform
- 31: Strömungsbereich
- 33: Druckseite des Schaufelblatts
- 34: Saugseite des Schaufelblatts
- 36: Ausnehmung
- 38: Strömungslinie
- 39: Bereich
- 40: Absaugeinrichtung
- 42: Raum
- 43: Ausnehmung
- 44: Absaugeinrichtung
- 46: Absaugeinrichtung
- 48: Absaugeinrichtung
- 50: Absaugeinrichtung
- 51: Raum
- 52: Absaugeinrichtung
- 54: Absaugeinrichtung
- 55: Steg
- 57: Leitungsbereich
- 58: Düse
- 59: Rotorspitze
- 60: Teil der Gehäuseeinrichtung
- 61: Teil der Gehäuseeinrichtung
- 62: Abstützelement
- 63: Abstützelement
- 65: Leitungsbereich
- 66: Düse
- 68: Leitungsbereich
- 70: Raum
- 71: Raum
- 72: Leitungsbereich
- 74: Vorderkante des Schaufelblatts
- 75: Hinterkante des Schaufelblatts
- 77: vorderer Randbereich der Plattform
- 78: hinterer Randbereich der Plattform
- 79: vorderer Randbereich der Plattform
- 80: hinterer Randbereich der Plattform
- 81: vorderes Ende der Plattform
- 82: hinteres Ende der Plattform
- 83: vorderes Ende der Plattform
- 84: hinteres Ende der Plattform
- 86 bis 89: Referenzpunkt
- 91, 92: geradlinige Verbindung
- 93: Erstreckung
- 94: Pfeil
- 95: Strömungslinie
- 96: Kante
- 97: Seitenfläche der Plattform
- 98: Fläche der Plattform
- 99: Radius
- 100: Überhang; Nase
- 101: Seitenfläche der Gehäuseeinrichtung
- 102: Überhang; Nase
- 103: Kante
- 104: Radius
- 105, 106: Überhang; Nase
- 107: Länge
- 108: Absaugeinrichtung
- 110: Erstreckung
- a: axialer Richtung der Leitschaufel
- A: axiale Richtung des Strahltriebwerks
- B: Breite des Kernstromkanals
- r: radiale Richtung Leitschaufel
- R: radiale Richtung des Strahltriebwerks
- u: Umfangsrichtung zur Mittelachse der Leitschaufel
- U: Umfangsrichtung des Strahltriebwerks

## Patentansprüche

1. Statorvorrichtung (5) für eine Strömungsmaschine (1) mit einer Gehäuseeinrichtung (8) und mehreren Leitschaufeln (12), die umfangsseitig verteilt an der Gehäuseeinrichtung (8) angeordnet sind, wobei die Leitschaufeln (12) jeweils mit einem Schaufelblatt (13) und jeweils wenigstens einer Plattform (14, 19) ausgeführt sind, wobei die Plattformen (14, 19) zumindest bereichsweise eine Oberfläche (27) eines im Betrieb der Statorvorrichtung (5) mit Arbeitsfluid durchströmten Ringkanals (3) bilden und gegenüber der Gehäuseeinrichtung (8) verstellbar gelagert sind, und wobei ein Strömungsbereich (31) vorgesehen ist, über den im Betrieb der Statorvorrichtung (5) ein Arbeitsfluid zumindest bereichsweise in radialer Richtung (R) der Statorvorrichtung (5) auf einer dem Ringkanal (3) abgewandten Seite der Plattform (14, 19) von einer Druckseite (33) des Schaufelblatts (13) zu einer Saugseite (34) des Schaufelblatts (13) strömt, wobei der Strömungsbereich (31) durch einen zwischen der Plattform (14, 19) und der Gehäuseeinrichtung (8) im Bereich einer Oberfläche (27) des Ringkanals (3) in radialer Richtung (r) der Leitschaufeln (12) eine Mittelachse (18) eines spindelförmigen Bereichs (15) der Plattform (14, 19) umlaufenden Spalt (28), der sich ausgehend von der Oberfläche (27) des Ringkanals (3) in axialer Richtung (a) der Mittelachse (18) nach außen erstreckt, und einen Abstand zwischen einer dem Ringkanal (3) abgewandten Fläche (30) der Plattform (14, 19) in radialer Richtung (R) der Strömungsmaschine (1) gegenüber der Gehäuseeinrichtung (8) gebildet ist,
**dadurch gekennzeichnet,**
**dass** wenigstens eine an den Strömungsbereich (31) grenzende, durch eine Ausnehmung gebildete Absaugeinrichtung (40, 44, 46, 48, 50, 52, 54, 108) vorgesehen ist, über die im Betrieb der Statorvorrichtung (5) Arbeitsfluid aus dem Strömungsbereich (31) ableitbar ist.

2. Statorvorrichtung nach Anspruch 1, **dadurch gekennzeichnet, dass** die Absaugeinrichtung (46, 48) direkt an die Oberfläche (27) des Ringkanals (3) grenzt.

3. Statorvorrichtung nach Anspruch 1, **dadurch gekennzeichnet, dass** die Absaugeinrichtung (40, 44, 50, 52, 54, 108) in radialer Richtung (R) der Statorvorrichtung (5) beabstandet zu der Oberfläche (27) des Ringkanals (3) an den Strömungsbereich (31) grenzt.

4. Statorvorrichtung nach einem der Ansprüche 1 bis 3, **dadurch gekennzeichnet, dass** die Absaugeinrichtung (50, 108) sich im Wesentlichen in radialer Richtung (R) der Statorvorrichtung (5) erstreckt.

5. Statorvorrichtung nach einem der Ansprüche 1 bis 4, **dadurch gekennzeichnet, dass** die Absaugeinrichtung (40, 44, 46, 48, 50, 52, 54, 108) in einem Bereich mit dem Strömungsbereich (31) verbunden ist, der der Druckseite (33) und/oder der Saugseite (34) des Schaufelblatts (13) der Leitschaufel (12) zugewandt ist.

6. Statorvorrichtung nach einem der Ansprüche 1 bis 5, **dadurch gekennzeichnet, dass** sich die Absaugeinrichtung (40, 44, 46, 48, 50, 52, 54, 108) in Umfangsrichtung (u) der Leitschaufel (12) über einen Winkelbereich erstreckt, der insbesondere größer 20°, vorzugsweise größer 30°, ist.

7. Statorvorrichtung nach einem der Ansprüche 1 bis 6, **dadurch gekennzeichnet, dass** die Absaugeinrichtung (40, 44, 46, 48, 50, 52, 54, 108) bezüglich einer Zentralachse der Statorvorrichtung (5) umfangsseitig im Wesentlichen umlaufend in der Gehäuseeinrichtung (8) verläuft.

8. Statorvorrichtung nach einem der Ansprüche 1 bis 7, **dadurch gekennzeichnet, dass** die Gehäuseeinrichtung (8) im Bereich der Leitschaufel (12) eine an den Ringkanal (3) grenzende Ausnehmung (43) aufweist.

9. Statorvorrichtung nach einem der Ansprüche 1 bis 8, **dadurch gekennzeichnet, dass** wenigstens eine Plattform (14, 19) in axialer Richtung (A) der Statorvorrichtung (5) zwischen zwei Referenzpunkten (86 und 87 bzw. 88 und 89) des Ringkanals (3) angeordnet ist, wobei ein erster Referenzpunkt (86, 88) einen Randpunkt des Ringkanals (3) darstellt, der bezüglich einer Mittellängsachse der Plattform (14, 19) um 10 % einer axialen Erstreckung der Plattform (14, 19) stromauf eines vorderen Endes (81, 83) der Plattform (14, 19) angeordnet ist, und wobei ein zweiter Referenzpunkt (87, 89) einen Randpunkt des Ringkanals (3) darstellt, der bezüglich der Mittellängsachse der Plattform (14, 19) um 10 % der axialen Erstreckung der Plattform (14, 19) stromab eines hinteren Endes (82, 84) der Plattform (14, 19) angeordnet ist, wobei zumindest ein Randbereich (77, 78, 79, 80) der Plattform (14, 19) in radialer Richtung (R) der Statorvorrichtung (5) gegenüber einer geradlinigen Verbindung (91, 92) der beiden Referenzpunkte (86, 87 bzw. 88, 89) in den Ringkanal (3) ragt.

10. Statorvorrichtung nach Anspruch 9, **dadurch gekennzeichnet, dass** der sich gegenüber der geradlinigen Verbindung (91, 92) der beiden Referenzpunkte (86, 87 bzw. 88, 89) in den Ringkanal (3) ragende Randbereich (77, 78, 79, 80) der Plattform (14, 19) in einem in axialer Richtung (A) der Statorvorrichtung (5) vorderen und/oder hinteren Bereich der Plattform (14, 19) befindet.

11. Statorvorrichtung nach einem der Ansprüche 1 bis 10, **dadurch gekennzeichnet, dass** die Plattform (14, 19) der Leitschaufel (12) in einem bezüglich der radialen Richtung (R) der Statorvorrichtung (5) inneren und/oder äußeren Randbereich des Schaufelblatts (13) angeordnet ist.

12. Statorvorrichtung nach einem der Ansprüche 9 bis 11, **dadurch gekennzeichnet, dass** sich der in den Ringkanal (3) erstreckende Randbereich (77, 78, 79, 80) der Plattform (14, 19) gegenüber der geradlinigen Verbindung (91, 92) der Referenzpunkte (86, 87 bzw. 88, 89) um wenigstens 0,3 %, insbesondere etwa 0,8 % einer Erstreckung des Ringkanals (3) in radialer Richtung (R) der Statorvorrichtung (5) im Bereich des Randbereichs (77, 78, 79, 80) der Plattform (14, 19) in den Ringkanal (3) erstreckt.

13. Statorvorrichtung nach einem der Ansprüche 9 bis 12, **dadurch gekennzeichnet, dass** der sich in den Ringkanal (3) erstreckende Randbereich (77, 78, 79, 80) der Plattform (14, 19) in einem in axialer Richtung (A) der Statorvorrichtung (5) vorderen bzw. hinteren Bereich mit einer Verrundung (99, 104) ausgeführt ist, wobei der sich in den Ringkanal (3) erstreckende Randbereich (77, 78, 79, 80) der Plattform (14, 19) vorzugsweise mit einem Überhang (100, 102, 105, 106) ausgeführt ist, und wobei die Plattform (14, 19) in einem dem Ringkanal (3) zugewandten Bereich eine größere Erstreckung in axialer Richtung (A) der Statorvorrichtung (5) als in einem dem Ringkanal (3) abgewandten Bereich aufweist, wobei der Überhang (100, 102, 105, 106) vorzugsweise in axialer Richtung (A) der Statorvorrichtung (5) die an die Plattform (14, 19) angrenzende Gehäuseeinrichtung (8) zumindest bereichsweise übergreift.

14. Schaufelradvorrichtung (2) mit einer Statorvorrichtung (5) nach einem der Ansprüche 1 bis 13 und einer Rotorvorrichtung (4), wobei die Absaugeinrichtung (40, 44, 46, 48, 50, 52, 54, 108, 109) mit einem Leitungsbereich (57, 65, 68) verbunden ist, über den Arbeitsfluid im Betrieb der Schaufelradvorrichtung (2) der Rotorvorrichtung (4) zuführbar ist.

15. Schaufelradvorrichtung nach Anspruch 14, **dadurch gekennzeichnet, dass** der Leitungsbereich (57, 65, 68) wenigstens eine Düse (58, 66) aufweist, über die im Betrieb der Schaufelradvorrichtung (2) Arbeitsfluid der Rotorvorrichtung (4) zuführbar ist.

## Claims

1. Stator device (5) for a jet engine (1) with a housing appliance (8) and multiple guide vanes (12) that are arranged in a circumferentially distributed manner at the housing appliance (8), wherein the guide vanes (12) are respectively embodied with a blade (13) and respectively at least one platform (14, 19), wherein the platforms (14, 19) at least in certain areas form a surface (27) of a annular channel (3) through which working fluid flows during operation of the stator device (5), and are mounted so as to be adjustable with respect to the housing appliance (8), and wherein a flow area (31) is provided via which a working fluid flows during operation of the stator device (5) at least in certain areas in the radial direction (R) of the stator device (5) on a side of the platform (14, 19) that is facing away from the annular channel (3) from a pressure side (33) of the blade (13) to a suction side (34) of the blade (13), wherein the flow area (31) is formed by a gap (28) extending circumferentially about a central axis (18) of a spindle-shaped area (15) of the platform (14, 19) in the radial direction (r) of the guide vanes (12) between the platform (14, 19) and the housing appliance (8) in the area of a surface (27) of the annular channel (3), with the gap (28) extending outwards from the surface (27) of the annular channel (3) in the axial direction (a) of the central axis (18), and by a distance between a surface (30) of the platform (14, 19) that is facing away from the annular channel (3) in the radial direction (R) of the jet engine (1) with respect to the housing appliance (8), **characterized in that** at least one suction appliance (40, 44, 46, 48, 50, 52, 54, 108) is provided which adjoins the flow area (31) and is formed by a recess, and via which working fluid can be conducted out of the flow area (31) during operation of the stator device (5).

2. Stator device according to claim 1, **characterized in that** the suction appliance (46, 48) directly adjoins the surface (27) of the annular channel (3).

3. Stator device according to claim 1, **characterized in that** the suction appliance (40, 44, 50, 52, 54, 108) adjoins the flow area (31) at a distance to the surface (27) of the annular channel (3) in the radial direction (R) of the stator device (5).

4. Stator device according to one of the claims 1 to 3, **characterized in that** the suction appliance (50, 108) extends substantially in the radial direction (R) of the stator device (5).

5. Stator device according to one of the claims 1 to 4, **characterized in that** the suction appliance (40, 44, 46, 48, 50, 52, 54, 108) is connected to the flow area (31) in an area that is facing towards the pressure side (33) and/or the suction side (34) of the blade (13) of the guide vane (12).

6. Stator device according to one of the claims 1 to 5, **characterized in that** the suction appliance (40, 44, 46, 48, 50, 52, 54, 108) extends in the circumferential direction (u) of the guide vane (12) across an angular range that is in particular larger than 20°, preferably larger than 30°.

7. Stator device according to one of the claims 1 to 6, **characterized in that** the suction appliance (40, 44, 46, 48, 50, 52, 54, 108) extends inside the housing appliance (8) so as to substantially run peripherally along the circumferential side with respect to a central axis of the stator device (5).

8. Stator device according to one of the claims 1 to 7, **characterized in that** the housing appliance (8) has a recess (43) that adjoins the annular channel (3) in the area of the guide vane (12).

9. Stator device according to one of the claims 1 to 8, **characterized in that** at least one platform (14, 19) is arranged in the axial direction (A) of the stator device (5) between two reference points (86 and 87 or 88 and 89) of the annular channel (3), wherein a first reference point (86, 88) represents a boundary point of the annular channel (3), which is arranged upstream of a front end (81, 83) of the platform (14, 19) by 10% of an axial extension of the platform (14, 19) with respect to a central longitudinal axis of the platform (14, 19), and wherein a second reference point (87, 89) represents a boundary point of the annular channel (3), which is arranged downstream of a rear end (82, 84) of the platform (14, 19) by 10 % of the axial extension of the platform (14, 19) with respect to the central longitudinal axis of the platform (14, 19), wherein at least an edge area (77, 78, 79, 80) of the platform (14, 19) projects into the annular channel (3) with respect to a rectilinear connection (91, 92) of the two reference points (86, 87 or 88, 89) in the radial direction (R) of the stator device (5).

10. Stator device according to claim 9, **characterized in that** the edge area (77, 78, 79, 80) of the platform (14, 19) that projects into the annular channel (3) with respect to the rectilinear connection (91, 92) of the two reference points (86, 87 or 88, 89) is located in a front and/or a rear area of the platform (14, 19) in the axial direction (A) of the stator device (5).

11. Stator device according to one of the claims 1 to 10, **characterized in that** the platform (14, 19) of the guide vane (12) is arranged in an inner and/or outer edge area of the blade (13) with respect to the radial direction (R) of the stator device (5).

12. Stator device according to one of the claims 9 to 11, **characterized in that** the edge area (77, 78, 79, 80) of the platform (14, 19) that extends into the annular channel (3) extends into the annular channel (3) by at least 0.3 %, in particular approximately 0.8 %, of an extension of the annular channel (3) with respect to a rectilinear connection (91, 92) of the reference points (86, 87 or 88, 89) in the radial direction (R) of the stator device (5) in the area of the edge area (77, 78, 79, 80) of the platform (14, 19).

13. Stator device according to one of the claims 9 to 12, **characterized in that** the edge area (77, 78, 79, 80) of the platform (14, 19) that extends into the annular channel (3) is embodied with a round (99, 104) in a front or rear area in the axial direction (A) of the stator device (5), wherein the edge area (77, 78, 79, 80) of the platform (14, 19) that extends into the annular channel (3) is preferably embodied with a projection (100, 102, 105, 106), and wherein the platform (14, 19) has a larger extension in the axial direction (A) of the stator device (5) in an area that is facing towards the annular channel (3) than in an area that is facing away from the annular channel (3), wherein the projection (100, 102, 105, 106) preferably overlaps the housing appliance (8) that adjoins the platform (14, 19) in the axial direction (A) of the stator device (5) at least in certain areas.

14. Blade wheel device (2) with a stator device (5) according to one of the claims 1 to 13 and a rotor device (4), wherein the suction appliance (40, 44, 46, 48, 50, 52, 54, 108, 109) is connected to a conduit area (57, 65, 68) via which working fluid can be supplied to a rotor device (4) during operation of the blade wheel device (2).

15. Blade wheel device according to claim 14, **characterized in that** the conduit area (57, 65, 68) has at least one nozzle (58, 66) via which working fluid can be supplied to the rotor device (4) during operation of the blade wheel device (2).

## Revendications

1. Dispositif de stator (5) pour une turbomachine (1), comprenant un dispositif de boîtier (8) et plusieurs aubes directrices (12) qui sont disposées sur le dispositif de boîtier (8) de manière répartie sur la périphérie, les aubes directrices (12) étant à chaque fois réalisées avec une pale (13) et à chaque fois au moins une plate-forme (14, 19), les plates-formes (14, 19) formant au moins en partie une surface (27) d'un canal annulaire (3) parcouru pendant le fonctionnement du dispositif de stator (5) par un fluide de travail et étant supportées de manière réglable par rapport au dispositif de boîtier (8), et une région d'écoulement (31) étant prévue, par le biais de laquelle, pendant le fonctionnement du dispositif de stator (5), un fluide de travail s'écoule au moins en partie dans la direction radiale (R) du dispositif de stator (5) sur un côté de la plate-forme (14, 19) opposée au canal annulaire (3) depuis un côté pression (33) de la pale (13) vers un côté aspiration (34) de la pale (13), la région d'écoulement (31) étant formée par une fente (28) entre la plate-forme (14, 19) et le dispositif de boîtier (8) dans la région d'une surface (27) du canal annulaire (3) dans la direction radiale (r) des aubes directrices (12), s'étendant sur la périphérie autour d'un axe médian (18) d'une région en forme de broche (15) de la plate-forme (14, 19), qui s'étend vers l'extérieur à partir de la surface (27) du canal annulaire (3) dans la direction axiale (a) de l'axe médian (18), et une distance entre une surface (30) de la plate-forme (14, 19) opposée au canal annulaire (3) dans la direction radiale (R) de la turbomachine (1) par rapport au dispositif de boîtier (8),
**caractérisé en ce**
**qu'**il est prévu au moins un dispositif d'aspiration (40, 44, 46, 48, 50, 52, 54, 108) adjacent à la région d'écoulement (31), formé par un évidement, par le biais duquel le fluide de travail peut être évacué hors de la région d'écoulement (31) pendant le fonctionnement du dispositif de stator (5).

2. Dispositif de stator selon la revendication 1, **caractérisé en ce que** le dispositif d'aspiration (46, 48) est directement adjacent à la surface (27) du canal annulaire (3).

3. Dispositif de stator selon la revendication 1, **caractérisé en ce que** le dispositif d'aspiration (40, 44, 50, 52, 54, 108) est adjacent à la région d'écoulement (31) dans la direction radiale (R) du dispositif de stator (5) à distance de la surface (27) du canal annulaire (3).

4. Dispositif de stator selon l'une quelconque des revendications 1 à 3,
**caractérisé en ce que** le dispositif d'aspiration (50, 108) s'étend essentiellement dans la direction radiale (R) du dispositif de stator (5).

5. Dispositif de stator selon l'une quelconque des revendications 1 à 4,
**caractérisé en ce que** le dispositif d'aspiration (40, 44, 46, 48, 50, 52, 54, 108) est connecté à la région d'écoulement (31) dans une région qui est tournée vers le côté de pression (33) et/ou vers le côté d'aspiration (34) de la pale (13) de l'aube directrice (12).

6. Dispositif de stator selon l'une quelconque des revendications 1 à 5,
**caractérisé en ce que** le dispositif d'aspiration (40, 44, 46, 48, 50, 52, 54, 108) s'étend dans la direction périphérique (u) de l'aube directrice (12) sur une plage angulaire qui est notamment supérieure à 20°, de préférence supérieure à 30°.

7. Dispositif de stator selon l'une quelconque des revendications 1 à 6,
**caractérisé en ce que** le dispositif d'aspiration (40, 44, 46, 48, 50, 52, 54, 108) s'étend, par rapport à un axe central du dispositif de stator (5), du côté de la périphérie essentiellement sur le pourtour dans le dispositif de boîtier (8).

8. Dispositif de stator selon l'une quelconque des revendications 1 à 7,
**caractérisé en ce que** le dispositif de boîtier (8) présente un évidement (43) adjacent au canal annulaire (3) dans la région de l'aube directrice (12).

9. Dispositif de stator selon l'une quelconque des revendications 1 à 8,
**caractérisé en ce qu'**au moins une plate-forme (14, 19) est disposée dans la direction axiale (A) du dispositif de stator (5) entre deux points de référence (86 et 87, respectivement 88 et 89) du canal annulaire (3), un premier point de référence (86, 88) constituant un point du bord du canal annulaire (3) qui, par rapport à un axe longitudinal médian de la plate-forme (14, 19), est disposé à 10 % d'une étendue axiale de la plate-forme (14, 19) en amont d'une extrémité avant (81, 83) de la plate-forme (14, 19), et un deuxième point de référence (87, 89) constituant un point du bord du canal annulaire (3) qui est disposé, par rapport à l'axe médian longitudinal de la plate-forme (14, 19), à 10 % de l'étendue axiale de la plate-forme (14, 19) en aval d'une extrémité arrière (82, 84) de la plate-forme (14, 19), au moins une région de bord (77, 78, 79, 80) de la plate-forme (14, 19) pénétrant dans le canal annulaire (3) dans la direction radiale (R) du dispositif de stator (5) par rapport à une liaison rectiligne (91, 92) des deux points de référence (86, 87, respectivement 88, 89).

10. Dispositif de stator selon la revendication 9, **caractérisé en ce que** la région de bord (77, 78, 79, 80) de la plate-forme (14, 19) pénétrant dans le canal annulaire (3), par rapport à la liaison rectiligne (91, 92) des deux points de référence (86, 87, respectivement 88, 89), se trouve dans une région de la plate-forme (14, 19) avant et/ou arrière dans la direction axiale (A) du dispositif de stator (5).

11. Dispositif de stator selon l'une quelconque des revendications 1 à 10,
**caractérisé en ce que** la plate-forme (14, 19) de l'aube directrice (12) est disposée dans une région de bord intérieure et/ou extérieure de la pale (13) par rapport à la direction radiale (R) du dispositif de stator (5).

12. Dispositif de stator selon l'une quelconque des revendications 9 à 11,
**caractérisé en ce que** la région de bord (77, 78, 79, 80) de la plate-forme (14, 19) s'étendant dans dans le canal annulaire (3), par rapport à la liaison rectiligne (91, 92) des points de référence (86, 87, respectivement 88, 89) s'étend sur au moins 0,3 %, en particulier sur environ 0,8 % d'une étendue du canal annulaire (3) dans la direction radiale (R) du dispositif de stator (5) dans la région de la région de bord (77, 78, 79, 80) de la plate-forme (14, 19) dans le canal annulaire (3).

13. Dispositif de stator selon l'une quelconque des revendications 9 à 12,
**caractérisé en ce que** la région de bord (77, 78, 79, 80) de la plate-forme (14, 19) s'étendant dans le canal annulaire (3) est réalisée dans une région avant ou arrière dans la direction axiale (A) du dispositif de stator (5), avec un arrondi (99, 104), la région de bord (77, 78, 79, 80) de la plate-forme (14, 19) s'étendant dans le canal annulaire (3) étant de préférence réalisée avec un dépassement (100, 102, 105, 106), et la plate-forme (14, 19), dans une région tournée vers le canal annulaire (3), présentant une plus grande étendue dans la direction axiale (A) du dispositif de stator (5) que dans une région opposée au canal annulaire (3), le dépassement (100, 102, 105, 106) venant de préférence en prise par le dessus au moins en partie avec le dispositif de boîtier (8) adjacent à la plate-forme (14, 19) dans la direction axiale (A) du dispositif de stator (5).

14. Dispositif de roue à aubes (2) comprenant un dispositif de stator (5) selon l'une quelconque des revendications 1 à 13 et un dispositif de rotor (4), le dispositif d'aspiration (40, 44, 46, 48, 50, 52, 54, 108, 109) étant connecté à une région de conduite (57, 65, 68) par le biais de laquelle du fluide de travail peut être acheminé au dispositif de rotor (4) pendant le fonctionnement du dispositif de roue à aubes (2).

15. Dispositif de roue à aubes selon la revendication 14, **caractérisé en ce que** la région de conduite (57, 65, 68) présente au moins une buse (58, 66) par le biais de laquelle du fluide de travail peut être acheminé au dispositif de rotor (4) pendant le fonctionnement du dispositif de roue à aubes (2).
